# EUROPÄISCHE PATENTSCHRIFT

(11) **EP 2 800 676 B1**
(45) Veröffentlichungstag und Bekanntmachung des Hinweises auf die Patenterteilung: **22.07.2020**
(21) Anmeldenummer: 12801520.3
(22) Anmeldetag: 03.12.2012
(51) Int. Cl.: B60Q 1/08, B60Q 1/10, G08G 1/16, G06K 9/20, G01S 13/931, G06K 9/00

(54) **VERFAHREN UND STEUERGERÄT ZUM ANPASSEN EINER OBEREN SCHEINWERFERSTRAHLGRENZE EINES SCHEINWERFERKEGELS**
METHOD AND CONTROL DEVICE FOR ADAPTING AN UPPER BOUNDARY OF A HEADLIGHT BEAM
PROCÉDÉ ET APPAREIL DE COMMANDE PERMETTANT D'AJUSTER LA LIMITE SUPÉRIEURE DE RAYONNEMENT D'UN FAISCEAU CONIQUE DE PHARE

(30) Priorität: 03.01.2012 DE 102012200048
(43) Veröffentlichungstag der Anmeldung: 12.11.2014
(73) Patentinhaber: Robert Bosch GmbH, 70442 Stuttgart (DE)
(72) Erfinder: EHLGEN, Tobias, 88212 Ravensburg (DE); FOLTIN, Johannes, 75417 Muehlacker (DE); MEISNER, Robert, 70806 Kornwestheim (DE)
(86) Internationale Anmeldenummer: PCT/EP2012/074270
(87) Internationale Veröffentlichungsnummer: WO 2013/102525

(56) Entgegenhaltungen:
- EP-A1- 1 757 485
- EP-A1- 2 147 823
- EP-A1- 2 479 064
- WO-A1-2012/116931
- DE-A1-102006 005 512
- JP-A- 7 172 232
- US-A- 6 144 158
- US-A1- 2007 262 882

## Beschreibung

### Stand der Technik

Die vorliegende Erfindung bezieht sich auf ein Verfahren zum Anpassen einer oberen Scheinwerferstrahlgrenze eines Scheinwerferkegels zumindest eines Scheinwerfers eines Fahrzeugs, auf ein Steuergerät zum Anpassen einer oberen Scheinwerferstrahlgrenze eines Scheinwerferkegels zumindest eines Scheinwerfers eines Fahrzeugs sowie auf ein entsprechendes Computerprogrammprodukt.

Eine herkömmliche Leuchtweitenregelung (LWR) eines Scheinwerfers eines Fahrzeugs ermöglicht ein vertikales Schwenken zumindest eines strahlbildenden Teils des Scheinwerfers oder einer Lichtquelle des Scheinwerfers, um einen Lichtkegel des Scheinwerfers an eine Beladungssituation des Fahrzeugs anzupassen. Eine automatische Leuchtweitenregelung kann über zumindest einen Fahrwerksensor einen Federungszustand und Beladungszustand des Fahrzeugs erkennen. Beispielsweise kann die automatische Leuchtweitenregelung, von Beschleunigungskräften wie Anfahren oder Bremsen hervorgerufene Nickbewegungen des Fahrzeugs ausgleichen, so dass der Lichtkegel trotz der Nickbewegung eine voreingestellte Leuchtweite beibehält.

Die EP 2 119 592 A1 beschreibt ein Steuergerät zur Steuerung der Lichtverteilung und der horizontalen Hell-Dunkel-Grenze von Hauptscheinwerfern eines Kraftfahrzeugs mit einem Signalverarbeitungsmittel zum Erzeugen von Steuersignalen für die Hauptscheinwerfer.

Die Druckschrift EP 2147823 A1 offenbart ein Verfahren und Vorrichtung zum Ermitteln einer geeigneten Lichtverteilung des durch mindestens einen Frontscheinwerfer eines Fahrzeugs abgestrahlten Lichts.

Die Druckschrift EP 1 757485 A1 offenbart ein Verfahren zur Steuerung der Leuchtweite der Scheinwerfer eines Kraftfahrzeuges.

Die Druckschrift JP 7172232 A offenbart eine Vorrichtung zur Steuerung einer Lichtverteilung eines Scheinwerfers.

Die Druckschrift US 6 144 158 A offenbart adaptive Anti-Blendungsscheinwerfer.

Die Druckschrift US 2007/262882 A1 offenbart eine Vorrichtung, ein System und ein Verfahren zur Fahrzeuglichtsteuerung.

Die Druckschrift DE 10 2006 005 512 A1 offenbart ein System und Verfahren zur Messung der Entfernung eines vorausfahrenden Fahrzeugs.

Die Druckschrift WO 2012/116931 A1 offenbart ein Verfahren und Steuergerät zum Beeinflussen einer Beleuchtungsszene von einem Fahrzeug.

Die Druckschrift EP 2 479 064 A1 offenbart ein Verfahren und eine Vorrichtung zur Steuerung eines Scheinwerfers für ein Fahrzeug, insbesondere ein Automobil.

### Offenbarung der Erfindung

Vor diesem Hintergrund wird mit der vorliegenden Erfindung ein Verfahren zum Anpassen einer oberen Scheinwerferstrahlgrenze eines Scheinwerferkegels zumindest eines Scheinwerfers eines Fahrzeugs, weiterhin eine Vorrichtung zum Anpassen einer oberen Scheinwerferstrahlgrenze eines Scheinwerferkegels zumindest eines Scheinwerfers eines Fahrzeugs, sowie schließlich ein entsprechendes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Die vorliegende Erfindung schafft ein Verfahren zum Anpassen einer oberen Scheinwerferstrahlgrenze eines Scheinwerferkegels zumindest eines Scheinwerfers eines Fahrzeugs, wobei das Verfahren in Anspruch 1 definiert ist.

Unter einer oberen Scheinwerferstrahlengrenze soll eine Grenze eines Lichtkegel ist oder eines anderen beleuchteten Bereichs verstanden werden, die von einem Boden, auf dem das Fahrzeug fährt, den größten vertikalen Abstand aufweist. Unter einem Fremdfahrzeug soll ein Fahrzeug verstanden werden, das sich von dem Fahrzeug unterscheidet, das den Scheinwerfer aufweist, dessen Scheinwerferstrahlgrenze gesteuert oder angepasst werden soll. Unter einer Beleuchtungseinheit soll eine Licht aussendende Einheit verstanden werden, wie beispielsweise einen Rücklicht, ein Blinker, eine Nebelschlussleuchte, ein Frontscheinwerfer, eine Positionsbegrenzungsleuchte eines Lkws oder dergleichen. Unter einer Anordnungsposition soll eine Position der Beleuchtungseinheit am Fremdfahrzeug verstanden werden, beispielsweise einem Heckbereich, einem Bereich einer Öffnung zu einem Kofferraum oder einem Dach des Fahrzeugs.

Unter einer Fahrzeugkontur soll ein Umriss oder eine Silhouette des Fahrzeugs verstanden werden, aus dem/der beispielsweise bestimmte Proportionen von Front-, Heck-, Dachbereich und/oder Radstand erkennbar sind und der/die einen Rückschluss auf einen Fahrzeugtyp des Fremdfahrzeugs ermöglichen. Unter einem Fremdfahrzeug-Identifikationssignal soll ein Signal verstanden werden, welches eine Information bezüglich der Anordnungsposition der Beleuchtungseinheit an dem Fremdfahrzeug und/oder eine Information über die Fahrzeugkontur enthält. Diese Information kann beispielsweise von einem optischen Sensor, wie beispielsweise einer Kamera, aufgenommen und kodiert seien und als Bussignal über einen Datenbus an eine entsprechende Auswerteeinheit übertragen werden. Unter einem Fahrzeugtyp soll eine Klasse von Fahrzeugen wie beispielsweise Pkws, Lkws, Motorräder, Radfahrer und/oder ein spezieller Fahrzeugtyp eines Fahrzeugherstellers verstanden werden. Unter einem Steuersignal soll ein Signal verstanden werden, welches ausgebildet ist, um in einer Scheinwerfersteuereinheit eine Veränderung einer ab Strahlenrichtung von Licht des Scheinwerfers zu bewirken.

Die vorliegende Erfindung basiert auf der Erkenntnis, dass nunmehr das Lichtausstrahlungsverhalten von Scheinwerfern des eigenen Fahrzeugs nicht mehr nur durch eine Position oder einen Abstand einer Beleuchtungsquelle vom eigenen Fahrzeug berücksichtigt wird, sondern dass auch das Fremdfahrzeug mit der Beleuchtungseinheit oder der bestimmten Kontur selbst analysiert wird. Hierbei kann eine Anordnungsposition einer Beleuchtungseinheit an dem Fremdfahrzeug herangezogen werden, da eine solche Anordnungsposition meist charakteristische für eine Fahrzeugklasse oder gar einen individuellen Fahrzeugtyp eines Fahrzeugherstellers ist. Alternativ oder zusätzlich kann eine solche Fahrzeugklasse oder gar ein individueller Fahrzeugtyp eines Fahrzeugherstellers auch durch eine Auswertung einer Fahrzeugkontur erfolgen, da die meisten Fahrzeughersteller gerade durch ein individuelles Design ihre Fahrzeuge oder Fahrzeugtypen von denen der Wettbewerber unterscheidbar machen möchten. Ist dann der Fahrzeugtyp des Fremdfahrzeugs bekannt, kann hieraus auch ein Rückschluss auf eine Position des Fahrers bzw. einem Kopf oder Augen des Fahrers gezogen werden, sodass die Einstellung der oberen Scheinwerferstrahlengrenze individuell auf das erkannte Fremdfahrzeug eingestellt werden kann, wobei dennoch sichergestellt werden kann, dass der Fahrer des Fremdfahrzeugs nicht geblendet wird. Die vorliegende Erfindung bietet somit den Vorteil, dass eine wesentlich genauere Anpassung eines von dem Scheinwerfer des Fahrzeugs auszuleuchtenden Bereichs an das erkannte Fremdfahrzeug erfolgen kann. Hierdurch lässt sich einerseits ein möglichst großer Bereich vor dem eigenen Fahrzeug ausleuchten (wodurch die Fahrzeugsicherheit des eigenen Fahrzeugs erhöht werden kann) und andererseits ein möglichst geringes Blendungsrisiko für den Fahrer des Fremdfahrzeugs sicherstellen.

Ferner schafft die vorliegende Erfindung ein Steuergerät, das Einheiten aufweist, die ausgebildet sind, um die Schritte eines Verfahrens gemäß einer Variaten des vorstehend genannten Verfahrens auszuführen oder anzusteuern.

Unter einem Steuergerät kann vorliegend ein elektrisches Gerät verstanden werden, das Sensorsignale verarbeitet und in Abhängigkeit davon Steuersignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogramm mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Gemäß einer Ausführungsform der vorliegenden Erfindung wird im Schritt des Ausgebens das Steuersignal zum Anpassen der oberen Scheinwerferstrahlarenze derart bereitgestellt, dass der Scheinwerfer des Fahrzeugs den Spiegel des Fremdfahrzeugs nicht beleuchtet. Eine derartige Ausführungsform der vorliegenden Erfindung bietet den Vorteil, dass sichergestellt werden kann, dass die obere Scheinwerferstrahlgrenze den Spiegel nicht beleuchtet und somit auch keine indirekte Blendung des Fahrers des Fremdfahrzeugs erfolgt.

Unter einem Spiegel soll ein Außenspiegel oder ein Rückspiegel im Dachbereich des Fahrzeugs verstanden werden.

Auch kann gemäß einer anderen Ausführungsform der vorliegenden Erfindung im Schritt des Einlesens eine Farbe des von der Beleuchtungseinheit ausgesandten Lichts erfasst und unter Verwendung der Farbe des erfassten Lichts ein Rückschluss auf eine Fahrtrichtung des Fremdfahrzeugs bestimmt werden, um das Fremdfahrzeug-Identifikationssignal bereitzustellen. Unter einer Farbe des von der Beleuchtungseinheit aus gesamten Lichts kann beispielsweise eine Unterscheidung in weißes Licht, das üblicherweise von einem Frontscheinwerfer des Fremdfahrzeugs aus gesandt wird, gegenüber einem roten oder gelben Licht verstanden werden, wie es beispielsweise von Rückleuchten, Bremslichter oder Blinker aus gesandt wird. Hierdurch kann als Vorteil die Fahrtrichtung des Fremdfahrzeugs ermittelt werden, da beispielsweise ein Licht von einem entgegenkommenden Fahrzeug als weißes Licht von den Frontscheinwerfern des Fremdfahrzeugs erkannt wird, wogegen Licht von einem vorausfahrenden Fahrzeug meist als rotes Licht der Rückleuchten oder Bremslichter erkannt wird. Eine derartige Ausführungsform der vorliegenden Erfindung bietet den Vorteil, dass die Fahrtrichtung als Fahrzeugtyp des Fremdfahrzeugs sehr einfach bestimmt werden kann, sodass einer Steuereinheit zur Steuerung der Lichtaussendung durch die Scheinwerfer eine Vorabinformation übermittelt werden kann, dass beispielsweise die obere Scheinwerferstrahlgrenze schneller (beispielsweise bei einem entgegenkommenden Fremdfahrzeug) oder ein langsamer (beispielsweise bei einem vorausfahrenden Fremdfahrzeug) angepasst werden sollte.

Erfindungsgemäß erfolgt auch im Schritt des Erfassens eine Auswertung einer Anzahl von Beleuchtungseinheiten, um das Fremdfahrzeug-Identifikationssignal bereitzustellen. Eine derartige Ausführungsform der vorliegenden Erfindung bietet den Vorteil, dass bestimmte Fahrzeugklassen sehr einfach voneinander unterschieden werden können. Beispielsweise weist die Fahrzeugklasse der Pkws zwei nebeneinander angeordnete Beleuchtungsquellen (beispielsweise zwei nebeneinanderliegende Frontscheinwerfer oder zwei nebeneinanderliegende Rückleuchten) auf, wogegen bei Motorrädern lediglich eine Beleuchtungsquelle zu erkennen ist. Bei der Fahrzeugklasse der Lkws sind dagegen weitere Beleuchtungsquellen erkennbar, die beispielsweise durch die Positionsbegrenzungsleuchten gebildet werden.

Gemäß einer weiteren Ausführungsform der vorliegenden Erfindung kann im Schritt des Einlesens zusätzlich eine drahtlos aus dem Fremdfahrzeug übertragene Information über den Fahrzeugtyp des Fremdfahrzeugs verwendet werden, um das Fremdfahrzeug-Identifikationssignal bereitzustellen. Eine derartige Ausführungsform der vorliegenden Erfindung bietet den Vorteil, dass in zukünftigen modernen Fahrzeugen auch eine drahtlose Kommunikation mit weiteren Fahrzeugen verfügbar ist, welche zur Erhöhung der Verkehrssicherheit auch für die Scheinwerfersteuerung mitbenutzt werden kann. Über eine solche drahtlose Kommunikation kann direkt ein Identifikationssignal an das Fahrzeug übersandt werden, wodurch eine Verifikation oder Plausibilisierung des erkannten Fahrzeugtyps im eigenen Fahrzeug möglich wird.

Ferner ist auch eine Ausführungsform der vorliegenden Erfindung denkbar, bei der, wenn im Schritt des Einlesens ein Fremdfahrzeug-Identifikationssignal bereitgestellt wird, das eine Information enthält, dass eine exakte Klassifikation des Fahrzeugtyps des Fremdfahrzeugs nicht möglich ist, im Schritt des Ausgebens das Steuersignal derart bereitgestellt wird, dass die obere Scheinwerferstrahlgrenze auf eine vorbestimmte Sicherheitsobergrenze angepasst wird. Eine derartige Ausführungsform der vorliegenden Erfindung stellt sicher, dass ein gewisser Sicherheitsbereich vor oder am Fremdfahrzeug nicht durch den oder die Scheinwerfer des eigenen Fahrzeugs beleuchtet werden. In diesen Sicherheitsbereich, der beispielsweise einen Bereich betrifft, auf dem sich das Fahrzeug noch nicht oder nicht mehr befindet oder der üblicherweise nur Fahrzeugräder, ein Fahrzeugheck oder einen Kotflügel des Fahrzeugs einschließt, ist mit keiner Gefährdung des Fahrers des Fremdfahrzeugs durch Blendung zu rechnen. Dennoch kann ein möglichst großer Bereich zwischen dem eigenen Fahrzeug und dem Fremdfahrzeug ausgeleuchtet werden, um die Verkehrssicherheit zu erhöhen und möglicherweise vorhandene Hindernisse im Bereich zwischen dem eigenen Fahrzeug und dem Fremdfahrzeug für den Fahrer des eigenen Fahrzeugs frühzeitig erkennbar zu machen.

Günstig ist es ferner, wenn im Schritt des Ermittelns eine Position eines Kopfes eines Fahrers des Fremdfahrzeugs abgeschätzt wird, im Schritt des Ausgebens die obere Scheinwerferstrahlgrenze derart angepasst wird, dass die Position des Kopfes des Fahrers nicht durch Licht des Scheinwerfers beleuchtet wird. Insbesondere bei einer Klassifikation des Fremdfahrzeugs als einspuriges Fahrzeug beispielsweise ein Motorrad oder ein Fahrrad ist damit zu rechnen, dass der Kopf des Fahrers dieses Fahrzeugs deutlich höher über der Fahrbahn angeordnet ist als beispielsweise bei einem Pkw. Um sicherzustellen, dass die obere Scheinwerferstrahlengrenze auch die Augen des Fahrers eines solchen Fremdfahrzeugs trifft und somit eine Blendung des Fahrers dieses Fremdfahrzeugs hervorruft, sollte sichergestellt werden, dass die Position des Kopfes des Fahrers nicht durch Licht des Scheinwerfers des eigenen Fahrzeugs beleuchtet wird.

Gemäß einer weiteren Ausführungsform der Erfindung weist das Verfahren zusätzlich zu einer vorstehend genannten Variante der Erfindung die folgenden Schritte auf:
Erfassen eines zeitlichen Verlaufs einer Nickrate des Fahrzeugs oder eines von der Nickrate abhängigen Wertes und/oder einer Rollrate des Fahrzeugs oder eines von der Rollrate abhängigen Wertes;
Ermitteln einer Hüllkurve und/oder einer Amplitude des zeitlichen Verlaufs und/oder eines Mittelwerts des zeitlichen Verlaufs; und
Bereitstellen eines Steuersignals zum Anpassen der oberen Scheinwerferstrahlgrenze unter Verwendung der Hüllkurve, ansprechend auf eine Veränderung der unteren Hüllkurve und/oder Bereitstellen eines Steuersignals zum Anpassen der oberen Scheinwerferstrahlgrenze unter Verwendung der Amplitude, wobei die obere Scheinwerferstrahlgrenze umso steiler in Richtung der Fahrbahn vor dem Fahrzeug angepasst wird, je größer die Amplitude ist und/oder Bereitstellen des Steuersignals zum Anpassen der oberen Scheinwerferstrahlgrenze unter Verwendung des Mittelwerts des Verlaufs, wobei die obere Scheinwerferstrahlgrenze umso steiler in Richtung der Fahrbahn vor dem Fahrzeug angepasst wird, je negativer der Mittelwert des Verlaufs ist.

Die Nickrate oder die Rollrate kann dabei beispielsweise unter Verwendung einer Inertialsensorik und/oder unter Auswertung eines Bildes einer Kamera erfolgen, die ein Umfeld um das Fahrzeug erfasst. Bei der Hüllkurve kann die untere oder die obere Hüllkurve ermittelt werden.

Eine höchste mögliche obere Scheinwerferstrahlgrenze für Scheinwerfer eines Fahrzeugs kann aus einem Signal einer Intertialsensorik oder einem Bild einer Umfelderfassungseinrichtung, beispielsweise einer Kamera abgeleitet werden. Wenn ein Fremdfahrzeug von der Umfelderfassungseinrichtung erfasst ist, kann ein Relativwinkel von dem Fahrzeug zu dem Fremdfahrzeug aus dem Bild bestimmt werden. Dieser Relativwinkel kann als höchster Abstrahlwinkel für die Scheinwerfer verwendet werden.

Der Relativwinkel weist aufgrund von Eigenbewegungen des Fahrzeugs große Schwankungen auf. Zusätzlich verändert sich der Relativwinkel durch eine Bewegung des Fremdfahrzeugs relativ zum Fahrzeug.

Diese Ausführungsform der Erfindung basiert auf der Erkenntnis, dass die Bewegungskomponenten der Bewegung des eigenen Fahrzeugs durch ein Verfahren gemäß dem hier vorgestellten Ansatz getrennt werden können. Hochfrequente und hochamplitudige Signalanteile können auf diese Weise einen geringeren Einfluss auf die Scheinwerferstrahlgrenze ausüben. Dadurch ergeben sich gegenüber einer unmittelbaren Anpassung des Scheinwerferstrahls an eine Bewegung des eigenen Fahrzeugs ein Einsparpotential an Rechenleistung und ein Einsparpotential an Rechenzeit im Steuergerät, wodurch ein Nachlauf in der Signalverarbeitung verringert werden kann, was wiederum eine größere Annäherung der Scheinwerferstrahlgrenze an eine Blendgrenze erlaubt. Ferner lässt sich durch die Auswertung zeitlichen Verlaufes der Nickrate oder eines von der Nickrate abhängigen Wertes wie die Nickbeschleunigung oder dem Nickwinkel oder einem zeitlichen Verlauf der Rollrate oder einem von der Rollrate abhängigen Wert auch die Straßenqualität ermitteln, sodass hierdurch der Abstrahlwinkel der Scheinwerfer direkt angepasst und ausgeben werden kann, auch wenn kein Fremdfahrzeug sichtbar ist oder ein Fremdfahrzeug erst ein Mal erkannt wurde und demnach noch kein zeitlicher Verlauf für eine Position dieses Fahrzeugs vorliegt. Anstelle der Nick- oder Rollrate könnte auch die Objektposition im Bild einer Kamera ausgewertet werden, da die Kamera fest mit dem Fahrzeug verbaut ist und damit die gleiche Nick- oder Rollbewegung durchführt wie das Fahrzeug, was sich in der Position des Objektes im Bild niederschlägt. Die Auswertung des Nick- oder Rollwinkels bzw. der Nick- oder Rollrate ist vorteilhaft, da dann schon vor der Begegnung mit dem Fremdfahrzeug beispielsweise ein Sicherheitswinkel oder Sicherheitswert entsprechend berechnet werden kann und sich ein Scheinwerfersteuersystem so schneller einschwingen kann. Hierdurch ist es beispielsweise zusätzlich auch möglich, die Straßenqualität und die damit erwarteten Nick- oder Rollwinkeländerungen über Auswerten des eigenen Fahrzeug-Nick- oder Rollwinkelverlaufs (und Nick- oder Rollrate) abzuschätzen.

Vorteilhafterweise kann die Leuchtweitenregelung schneller reagieren und während der einander überlagerten Bewegungskomponenten steigt die obere Scheinwerferstrahlgrenze nicht über die Blendgrenze, um einen Fahrer des Fremdfahrzeugs nicht zu gefährden.

Gemäß einer besonderen Ausführungsform der vorliegenden Erfindung kann im Schritt des Erfassens der zeitliche Verlauf unter Auswertung einer Relativposition zumindest eines Merkmals eines Fremdfahrzeugs aus einem durch eine Umfelderfassungseinrichtung aufgenommenen Bild eines Erfassungsbereichs erfasst wird, ansprechend auf ein Erkennen eines Fremdfahrzeugs in dem Erfassungsbereich einer Umfelderfassungseinrichtung des Fahrzeugs. Eine derartige Ausführungsform der vorliegenden Erfindung bietet den Vorteil einer besonders einfachen Implementierung, da in modernen Fahrzeugen meist eine Kamera bereits vorhanden ist und die Auswertung durch einen besonders ausgestalteten einfachen Auswertungsalgorithmus möglich wird.

Unter einer oberen Scheinwerferstrahlgrenze kann ein Übergang zwischen einem gerichteten, konzentrierten Lichtstrahl eines Scheinwerfers und einem Streulichtbereich des Scheinwerfers verstanden werden. Die Scheinwerferstrahlgrenze kann beispielsweise eine vorgegebene Schwelle einer Lichtintensität des Scheinwerfers repräsentieren. Ein Fremdfahrzeug kann ein anderes Fahrzeug als das eigene Fahrzeug sein. Unter einer Umfelderfassungseinrichtung kann beispielsweise ein Radargerät, ein Laserscanner oder ein Kamerasystem verstanden werden. Ein Erfassungsbereich kann ein von der Umfelderfassungseinrichtung erfassbarer Raum oder ein erfassbarer Blickwinkel sein. Der Erfassungsbereich kann an einer Fahrzeuglängsachse in Fahrtrichtung ausgerichtet sein. Unter einem Merkmal des Fremdfahrzeugs kann ein bei Dunkelheit erkennbarer Bestandteil des Fremdfahrzeugs verstanden werden, wie beispielsweise eine oder mehrere Beleuchtungseinrichtung(en) oder ein oder mehrere Reflektoren. Eine Relativposition kann eine Seitenrichtung und eine Höhenrichtung des Merkmals in dem Bild repräsentieren. Ebenso kann die Relativposition nur eine Höhenrichtung zu dem Merkmal repräsentieren (z-Koordinate oder z-Winkel). Ein Bild der Umfelderfassungseinrichtung kann ein Pixelbild oder ein Informationsraster sein, aus dem zumindest die Höhenrichtung ermittelbar ist. Beispielsweise kann ein Sensor der Umfelderfassungseinrichtung eine vorbestimmte Auflösung pro Winkeleinheit aufweisen. Ein zeitlicher Verlauf kann eine Aufzeichnung der Relativposition über einen Zeitraum oder in bestimmten Zeitintervallen sein. Unter einer Hüllkurve kann eine Einhüllende über aufeinanderfolgende (lokale) Maxima (obere Hüllkurve) und/oder Minima (untere Hüllkurve) eines Signals verstanden werden. Unter einem positiven Gradienten der Hüllkurve kann man verstehen, dass die obere und/ oder untere Hüllkurve eine Veränderung zu größeren Werten annimmt. Die Signalwerte können dabei tendenziell größere Signalwerte annehmen. Unter einem positiven Gradienten der Hüllkurve kann man auch ein kleiner werdender Abstand von oberer und unterer Hüllkurve verstehen. Der negative Gradient beschreibt analog eine Veränderung in umgekehrter Richtung. Unter einem Nickwinkel kann ein Winkel zwischen einer Horizontalen der Fahrzeuglängsachse und einer Vertikalen vom Fahrzeug auf die Fahrbahn verstanden werden. Unter einem Nickwert, der vom Nickwinkel abhängig ist, kann beispielsweise eine Nickrate, eine Nickbeschleunigung oder ein ähnlicher Wert verstanden werden, der auf dem Nickwinkel oder einer Veränderung des Nickwinkels basiert. Unter einer Amplitude des zeitlichen Verlaufs kann eine Differenz zwischen unterschiedlichen einzelnen Werten des zeitlichen Verlaufs verstanden werden.

Im Schritt des Bereitstellens kann das Steuersignal für die obere Scheinwerferstrahlgrenze derart bereitgestellt werden, dass bei einer Einstellung der oberen Scheinwerferstrahlgrenze ein Sicherheitswert berücksichtigt wird, wobei der Sicherheitswert insbesondere einen vertikalen Sicherheitswinkel repräsentiert, um den die obere Scheinwerferstrahlgrenze zu einer maximalen oberen Scheinwerferstrahlgrenze abgesenkt wird, wobei die maximale obere Scheinwerferstrahlgrenze eine Scheinwerferstrahlgrenze repräsentiert, bei der keine Blendung eines Fahrers des Fremdfahrzeugs erfolgt. Unter einem Sicherheitswert kann eine Distanz oder ein Winkel verstanden werden, um den die Scheinwerferstrahlgrenze tiefer (d.h. in Richtung der Fahrbahn vor dem Fahrzeug) als der Sichtwinkel des Objekts oder die Blendgrenze eingestellt werden kann, um den Fahrer des Fremdfahrzeugs nicht zu blenden. Der Sicherheitswert kann dabei als ein Betrag verstanden werden, um den die Scheinwerferstrahlgrenze tiefer als der Sichtwinkel des Objekts abgesenkt wird.

Ferner kann der Sicherheitswert variabel sein, insbesondere wobei der Sicherheitswert kleiner werden kann, wenn die Hüllkurve einen positiven Gradienten aufweist und/oder die Amplitude sinkt und alternativ oder ergänzend ein Mittelwert des Verlaufs einen positiven Wert aufweist. Einen positiven Wert weist der Mittelwert des Verlaufs dann auf, wenn das Fahrzeug (tendenziell) nach unten nickt. Der Sicherheitswert kann größer werden, wenn die Hüllkurve einen negativen Gradienten aufweist und/oder die Amplitude steigt und alternativ oder ergänzend ein Mittelwert des Verlaufs einen negativen Wert aufweist. Einen negativen Wert weist der Mittelwert des Verlaufs dann auf, wenn das Fahrzeug (tendenziell) nach oben nickt. Der Sicherheitswert kann ferner kleiner werden, wenn ein Abstand zwischen dem Fahrzeug und dem Fremdfahrzeug größer wird. Der Sicherheitswert kann größer werden, wenn ein Abstand zwischen dem Fahrzeug und dem Fremdfahrzeug kleiner wird. Durch eine Reaktion auf zurückliegende Maxima und Schwingungen des zeitlichen Verlaufs des Relativwinkels und/oder Nickwinkel und/oder Nickwertes kann mit einer hohen Wahrscheinlichkeit ein ausreichend großer Sicherheitswert zu zukünftigen Maxima oder Schwingungen eingehalten werden.

Günstig ist es ferner, wenn gemäß einer Ausführungsform der vorliegenden Erfindung im Schritt des Bereitstellens der Sicherheitswert abhängig von einem erkannten Fahrzeugtyp und/oder einer erkannten Fahrtrichtung des Fremdfahrzeugs bestimmt wird. Eine derartige Ausführungsform der vorliegenden Erfindung bietet den Vorteil einer besonders guten Adaptierbarkeit des Sicherheitswertes an ein aktuell vorliegendes Umgebungsszenario um das Fahrzeug, sodass die Sicherheit aller Verkehrsteilnehmer durch eine optimale Ausleuchtung der Fahrbahn vor dem eigenen Fahrzeug ohne eine Blendung der weiteren Verkehrsteilnehmer erreicht werden kann.

Vorteilhaft ist es ferner, wenn gemäß einer Ausführungsform der vorliegenden Erfindung im Schritt des Bereitstellens der Sicherheitswert abhängig von einem ermittelten Grad von Fahrbahnunebenheiten bestimmt wird. Eine derartige Ausführungsform der vorliegenden Erfindung bietet den Vorteil, dass aus den Daten einer Kamera und zusätzlich oder alternativ Nicksensorik, mit der beispielsweise Nickwinkel oder Nickwerte gemessen werden können, auch ohne weitere erkannte Fahrzeuge ein Rückschluss auch die Straßenqualität gezogen werden, kann, sodass der Sicherheitswert optimal eingestellt werden kann, wodurch das Risiko einer Blendung von beispielsweise plötzlich hinter einer Kurve oder einer Bergkuppe auftauchenden Verkehrsteilnehmern stark reduziert wird.

Das Steuersignal kann zeitverzögert bereitgestellt werden, wenn die Hüllkurve positiven Gradienten aufweist. Das Steuersignal kann ferner unverzögert bereitgestellt werden, wenn die Hüllkurve einen negativen Gradienten aufweist. Die obere Scheinwerferstrahlgrenze kann alternativ oder zusätzlich zeitverzögert angehoben werden, wenn die Amplitude sinkt. Wenn die Amplitude steigt, kann die obere Scheinwerferstrahlgrenze unverzögert abgesenkt werden. Durch eine Zeitverzögerung beim Anheben der oberen Scheinwerferstrahlgrenze kann ein großer Teil der Rechenleistung eingespart werden, da während der Verzögerung keine fortlaufende Berechnung notwendig ist. Insbesondere können durch eine Zeitverzögerung auch elektromechanische Komponenten weniger belastet werden, da weniger Änderungen in der Lichtverteilung, die von diesen Komponenten durchgeführt werden müssen, bei der Scheinwerferansteuerung vorkommen. Durch ein direktes Ansprechen der Veränderung der Scheinwerferstrahlgrenze beim Absenken der oberen Scheinwerferstrahlgrenze kann schnell auf Bodenunebenheiten reagiert werden und eine Blendung von weiteren Verkehrsteilnehmern vermieden werden.

Im Schritt des Erfassens kann ansprechend auf ein Erkennen zumindest eines weiteren Fremdfahrzeugs im Erfassungsbereich zumindest ein weiterer zeitlicher Verlauf einer Relativposition zumindest eines Merkmals des weiteren Fremdfahrzeugs zu dem Fahrzeug erfasst werden, und die obere Scheinwerferstrahlgrenze an dasjenige Fremdfahrzeug angepasst werden, das die tiefere Relativposition des Merkmals eines der Fremdfahrzeuge in dem Bild aufweist. Dabei weist dasjenige Fremdfahrzeug, das das Merkmal mit der tieferen Relativposition aufweist, meist die höhere Blendungsgefährdung auf. Unter einer Blendungsgefährdung kann ein Grad oder eine Wahrscheinlichkeit verstanden werden, dass ein Fahrer des Fremdfahrzeugs von direktem Licht des Scheinwerfers des (eigenen) Fahrzeugs geblendet wird, wenn ein beispielsweise bei der Fahrt durch ein Schlagloch ein unvorhergesehener Sprung im Relativwinkel erfolgt und den Lichtkegel der Scheinwerfer direkt auf das Fremdfahrzeug richtet. Durch einen Vergleich mehrerer Fremdfahrzeuge kann eine Betriebssicherheit erhöht werden, da das aktuell (blendungs-)gefährdetste Fremdfahrzeug als Referenz für die maximal zulässige obere Scheinwerferstrahlgrenze verwendet wird.

Die Blendungsgefährdung kann ferner unter Berücksichtigung eines Differenzgeschwindigkeitsunterschieds zwischen dem Fremdfahrzeug und dem zumindest einen weiteren Fremdfahrzeug erkannt werden. Dadurch kann berücksichtigt werden, dass ein entgegenkommendes Fremdfahrzeug mit höherer Wahrscheinlichkeit in den Blendungsbereich geraten wird, als beispielsweise ein überholendes oder vorausfahrendes Fahrzeug.

Die Erfindung wird nachstehend anhand der beigefügten Zeichnungen beispielhaft näher erläutert. Es zeigen:
- Fig. 1: eine Darstellung eines Fahrzeugs mit einem Steuergerät gemäß einem Ausführungsbeispiel der vorliegenden Erfindung;
- Fig. 2: ein Ablaufdiagramm eines Verfahrens gemäß einem Ausführungsbeispiel der vorliegenden Erfindung;
- Fig. 3a und Fig. 3b: Darstellungen eines Fahrzeugs aus Fig. 1 mit einem vorausfahrenden Fremdfahrzeug;
- Fig. 4: eine Darstellung einer Höhendifferenz zwischen einem Außenspiegel und einer Rückleuchte eines Fremdfahrzeugs;
- Fig. 5a, Fig. 5b und Fig. 5c: Darstellungen eines Fahrzeugs mit Fremdfahrzeugen in unterschiedlichen Relativpositionen;
- Fig. 6: eine Darstellung eines Fahrzeugs auf unebenem Untergrund;
- Fig. 7: einen Zeitschrieb eines Abbilds von Rückleuchten eines Fahrzeugs und einen Zeitschrieb eines Steuergeräts gemäß einem Ausführungsbeispiel der vorliegenden Erfindung;
- Fig. 8: Darstellungen verschiedener Fahrsituationen eines Fahrzeugs mit Licht,
- Fig. 9a und Fig. 9b: Darstellungen einer geregelten Scheinwerferstrahlgrenze gemäß einem Ausführungsbeispiel der vorliegenden Erfindung; und
- Fig. 10a und Fig. 10b: Darstellungen einer geregelten vertikalen und horizontalen Scheinwerferstrahlgrenze gemäß einem Ausführungsbeispiel der vorliegenden Erfindung.

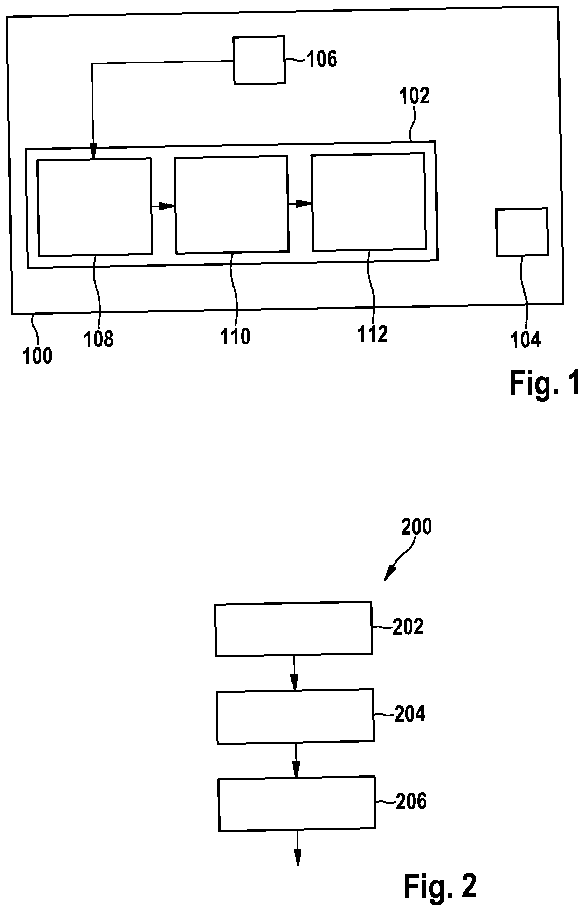

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird. Fig. 1 zeigt eine Darstellung eines Fahrzeugs 100 mit einem Steuergerät 102 zum Anpassen einer oberen Scheinwerferstrahlgrenze eines Scheinwerferkegels zumindest eines Scheinwerfers 104 des Fahrzeugs 100 gemäß einem Ausführungsbeispiel der vorliegenden Erfindung. Das Fahrzeug 100 weist eine Umfelderfassungseinrichtung 106 und den zumindest einen Scheinwerfer 104 auf. Die Umfelderfassungseinrichtung 106 ist dazu ausgebildet, eine Information oder ein Bild über einen Erfassungsbereich der Umfelderfassungseinrichtung 106 für das Steuergerät 102 bereitzustellen. Das Steuergerät 102 ist dazu ausgebildet, ansprechend auf die Information ein Steuersignal für den zumindest einen Scheinwerfer 104 bereitzustellen. Das Steuergerät 102 weist eine Erfassungseinrichtung 108, eine Einrichtung zum Ermitteln 110 sowie eine Einrichtung zum Bereitstellen 112 auf. Die Erfassungseinrichtung 108 kann dazu ausgebildet sein, einen Nickwinkel und/oder eine Nickrate, und/oder deren Verlauf zu erfassen. Die Erfassungseinrichtung 108 ist dazu ausgebildet, ansprechend auf ein Erkennen eines Fremdfahrzeugs in dem Erfassungsbereich der Umfelderfassungseinrichtung 106, einen zeitlichen Verlauf einer Relativposition zumindest eines Merkmals des Fremdfahrzeugs aus einem durch die Erfassungseinrichtung aufgenommenen Bild des Erfassungsbereichs zu erfassen. Die Einrichtung zum Ermitteln 110 ist dazu ausgebildet, eine untere Hüllkurve des zeitlichen Verlaufs zu ermitteln. Unter einer unteren Hüllkurve kann dabei einer Verbindungslinie von aufeinanderfolgenden lokalen Minima des zeitlichen Verlaufs verstanden werden. Alternativ oder ergänzend ist die Einrichtung zum Ermitteln 110 dazu ausgebildet, eine Amplitude des zeitlichen Verlaufs zu ermitteln. Die Einrichtung zum Bereitstellen 112 ist dazu ausgebildet, ansprechend auf eine Veränderung der unteren Hüllkurve, das Steuersignal zum Anpassen der oberen Scheinwerferstrahlgrenze unter Verwendung der unteren Hüllkurve bereitzustellen. Alternativ oder ergänzend ist die Einrichtung zum Bereitstellen 112 dazu ausgebildet, das Steuersignal zum Anpassen der oberen Scheinwerferstrahlgrenze unter Verwendung der Amplitude bereitzustellen, wobei die obere Scheinwerferstrahlgrenze umso steiler in Richtung der Fahrbahn vor dem Fahrzeug bereitgestellt wird, je größer die Amplitude ist, und/oder wobei die obere Scheinwerferstrahlgrenze umso steiler in Richtung der Fahrbahn vor dem Fahrzeug bereitgestellt werden kann, je größer der Nickwinkel in entgegengesetzter Richtung der Fahrbahn ist.

Fig. 2 zeigt ein Ablaufdiagramm eines Verfahrens 200 zum Anpassen einer oberen Scheinwerferstrahlgrenze eines Scheinwerferkegels zumindest eines Scheinwerfers eines Fahrzeugs gemäß einem Ausführungsbeispiel der vorliegenden Erfindung. Das Verfahren 200 kann auf einem Steuergerät gemäß Fig. 1 ausgeführt werden. Das Verfahren 200 weist einen Schritt des Einlesens 202, einen Schritt des Ermittelns 204 sowie einen Schritt des Ausgebens 206 auf. Im Schritt des Einlesens 202 wird zumindest eine Anordnungsposition einer Beleuchtungseinheit an einem Fremdfahrzeug und/oder einer Fahrzeugkontur des Fremdfahrzeugs eingelesen, um ein Fremdfahrzeug-Identifikationssignal bereitzustellen. Im Schritt des Ermittelns 204 wird ein Fahrzeugtyp des Fremdfahrzeugs unter Verwendung des Fremdfahrzeug-Identifikationssignals ermittelt. Im Schritt des Ausgebens 206 wird ein Steuersignal zum Anpassen der oberen Scheinwerferstrahlgrenze ausgegeben, wobei das Steuersignal unter Berücksichtigung des ermittelten Fahrzeugtyps ausgegeben wird.

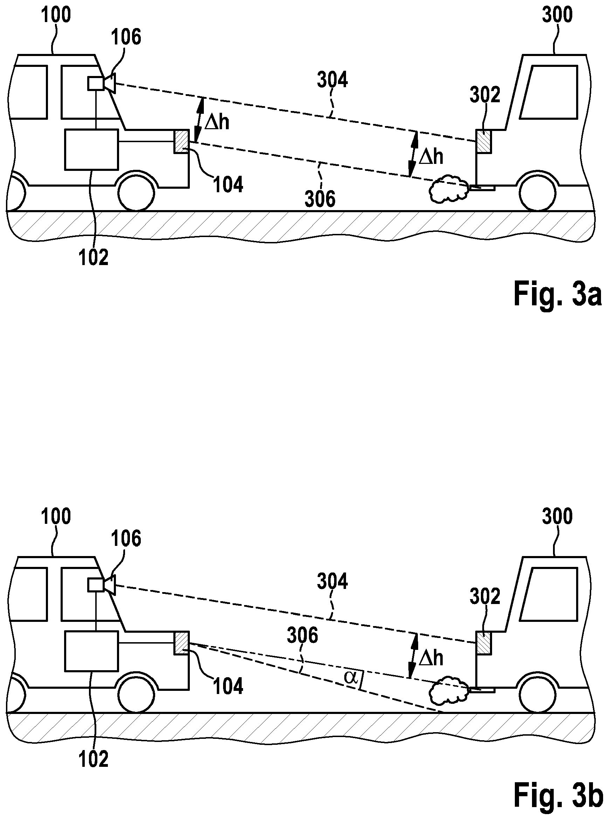

Die Figuren 3A und 3B zeigen je eine Darstellung eines Fahrzeugs 100 mit einem Steuergerät 102 gemäß einem Ausführungsbeispiel der vorliegenden Erfindung und eines vorausfahrenden Fremdfahrzeugs 300. Das Fahrzeug 100 weist zumindest einen steuerbaren Scheinwerfer 104, der mit dem Steuergerät 102 verbunden ist sowie eine Umfelderfassungseinrichtung 106 auf, die ebenfalls mit dem Steuergerät 102 verbunden ist. Hier ist die Umfelderfassungseinrichtung 106 eine Kamera, die fest mit dem Fahrzeug 100 verbunden ist. Die Kamera 106 ist entlang einer Fahrzeuglängsachse ausgerichtet und weist einen Erfassungsbereich auf, der ein Umfeld des Fahrzeugs 100 in Fahrtrichtung vordem Fahrzeug 100 umfasst. Innerhalb des Erfassungsbereichs befindet sich das Fremdfahrzeug 300. Das Fremdfahrzeug 300 weist ein bei Dunkelheit erkennbares Merkmal 302 auf. Hier ist das Merkmal 302 zumindest eine Rückleuchte des Fremdfahrzeugs 300. Die Kamera 106 erfasst das Merkmal 302. Das Merkmal 302 wird auf einen Sensor der Kamera 106 auf zumindest einem Pixel abgebildet. Eine Koordinate des zumindest einen Pixels auf dem Sensor repräsentiert einen Einfallswinkel eine Sichtlinie 304 in die Kamera 106 zwischen der Kamera 106 und der zumindest einen Rückleuchte 302. Im Steuergerät 102 wird ein Pixelbild der Kamera 106 ausgewertet. Dabei wird ein zeitlicher Verlauf der Koordinate des zumindest einen Pixels aufgezeichnet. Da die Koordinate des Pixels eine Relativposition des Fremdfahrzeugs 300 zu dem Fahrzeug 100 repräsentiert, repräsentiert der zeitliche Verlauf der Koordinate einen zeitlichen Verlauf der Relativposition des Fremdfahrzeugs 300. Die Kamera 106 weist einen Abstand Δh zu den zumindest einen Scheinwerfer 104 auf.

In Fig. 3A weist eine Scheinwerferstrahlgrenze 306 eines Lichtkegels des Scheinwerfers 104 einen, zu dem Einfallswinkel der Sichtlinie 304 identischen Ausfallswinkel auf. Die Scheinwerferstrahlgrenze 306 am Fremdfahrzeug 300 weist ebenfalls den Abstand Δh zur Sicht Linie 304 auf. Ein Fahrer des Fremdfahrzeugs 300 wird nicht geblendet.

Der Abstand Δh zwischen Kamera 106 und Scheinwerfer 104 ist ein (implizit) gegebener Sicherheits-Abstand in der Höhe. Wenn der Sichtwinkel a, der von der Kamera 106 gemessen wird, direkt als Einstellwinkel der Scheinwerfer 104 übernommen wird, bleibt die Differenz Δh in der Einbauhöhe erhalten. Durch eine Fahrdynamik des Fahrzeugs 100 kann es zu Blendungen kommen, die z.B. als "Aufblitzen" sichtbar werden. Über eine dynamische Leuchtweitenregulierung können die Scheinwerfer 104 schnell angepasst werden. Die Anpassung kann bei zu hohem Rechenaufwand "zu spät" erfolgen, da nicht vorausschauend gearbeitet wird oder die Scheinwerfer zu träge sind und eine große Reaktionszeit besitzen. Eine Messung von Bodenwellen ist daher vorteilhaft. Über ein zusätzliches festes Offset, um einen Ausgleich der Fahrdynamik zu erhalten, kann in vielen Situationen Sichtweite verloren gehen. Je näher ein Fahrzeug 300 ist, desto größer ist der Einfluss des Sicherheitsabstands durch die Einbauhöhe. Je weiter ein Fahrzeug 300 entfernt ist, desto größer wird der Einfluss des Sicherheitswinkels α als Sicherheitswert.

in Fig. 3B weist die Scheinwerferstrahlgrenze 306 als Ausfallswinkel zusätzlich zu dem Einfallswinkel der Sichtlinie 304 einen Sicherheitswinkel α als Sicherheitswert auf. Durch den Sicherheitswinkel α vergrößert sich der Abstand Δh zwischen der Sichtlinie 304 und der Scheinwerferstrahlgrenze 306 bis der Scheinwerferkegel das Fremdfahrzeug 300 erreicht. Der Fahrer des Fremdfahrzeugs 300 wird nun mit einer noch größeren Sicherheit nicht geblendet.

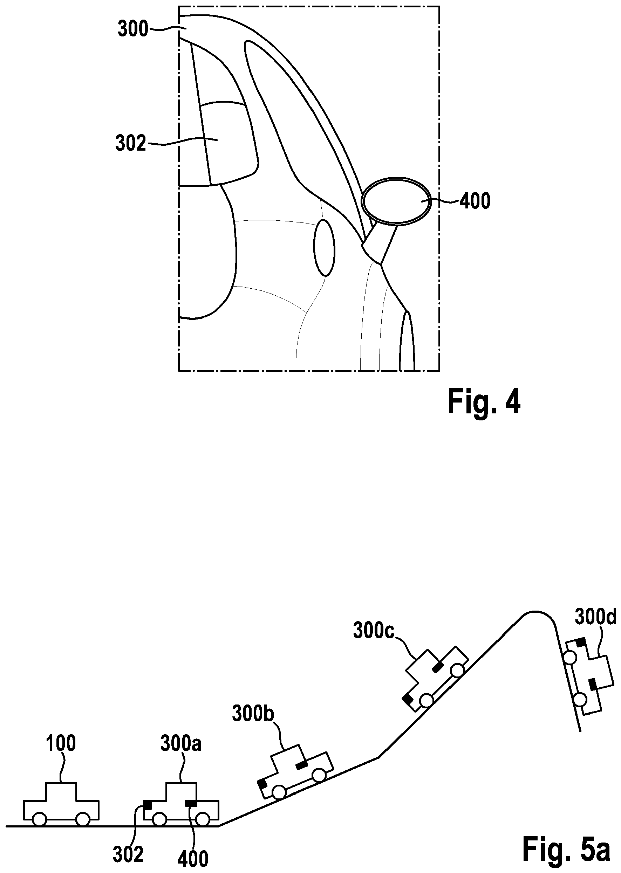

Fig. 4 zeigt eine Darstellung eines Fremdfahrzeugs 300, bei dem eine Rückleuchte 302, als bei Dunkelheit sichtbares Merkmal, oberhalb von Außenspiegeln 400 des Fremdfahrzeugs 300 angeordnet ist. Wenn eine Anpassung der Leuchtweite eines folgenden Fahrzeugs eine Scheinwerferstrahlgrenze der Scheinwerfer auf Höhe der Rückleuchten 302 einstellt, kann ein Lichtkegel der Scheinwerfer direkt auf die Außenspiegel 400 treffen. Die Außenspiegel 400 können den Lichtkegel unmittelbar in einen Gesichtsbereich eines Fahrers des Fremdfahrzeugs 300 reflektieren. Dadurch kann der Fahrer stark geblendet werden. Deshalb ist es vorteilhaft, wenn die Scheinwerferstrahlgrenze zuverlässig unterhalb der Rückspiegel 400 verläuft.

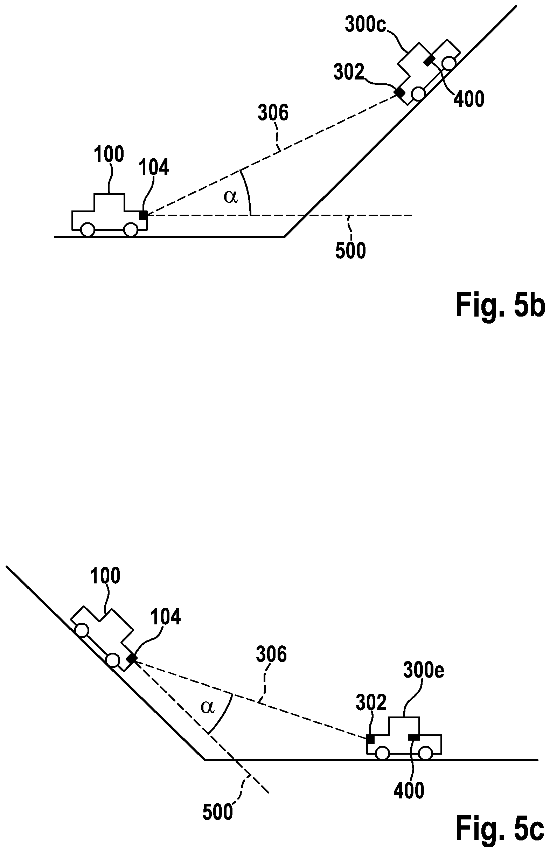

Die Figuren 5A, 5b und 5c zeigen eine Darstellung eines Fahrzeugs 100 mit einem vorausfahrenden Fremdfahrzeug 300. an dem Fahrzeug 100 ist eine Position der Rückleuchten 302 sowie eine Position der Außenspiegel 400 markiert. Die Position der Seitenspiegel 400 relativ zu den Rückleuchten 302 verändert sich je nach Fahrzeugorientierung. Ein fester Sicherheitswert wie beispielsweise ein Sicherheitswinkel (mit implizierter Sicherheits-Höhe) kann das Blendungs-Problem weitestgehend lösen.

In Fig. 5a ist das Fremdfahrzeug 300 in unterschiedlichen Relativpositionen zu dem Fahrzeug 100 dargestellt. Das Fahrzeug 300a befindet sich auf ebener Strecke vor dem Fahrzeug 100. Dabei sind die Rückleuchten 302 und die Außenspiegel 400 näherungsweise in einer Sichtlinie zu dem Fahrzeug 100 angeordnet. Das Fahrzeug 300b befindet sich auf einer leicht ansteigenden Strecke vor dem Fahrzeug 100. Vom Fahrzeug 100 aus gesehen befinden sich nun die Rückleuchten 302 tiefer als die Außenspiegel 400. Daher ist es nun möglich, eine Scheinwerferstrahlgrenze von Scheinwerfern des Fahrzeugs 100 anzuheben, ohne direkt die Außenspiegel 400 des Fahrzeugs 300b zu beleuchten. Dadurch kann eine Sichtweite eines Fahrers des Fahrzeugs 100 verbessert werden, ohne einen Fahrer des Fremdfahrzeugs 300b zu blenden. Das Fahrzeug 300c befindet sich auf einer stark ansteigenden Strecke vor dem Fahrzeug 100. Aufgrund der stark ansteigenden Strecke befinden sich die Rückleuchten 302 vom Fahrzeug 100 ausgesehen deutlich unterhalb der Außenspiegel 400. Eine Blendungsgefährdung des Fahrers des Fremdfahrzeugs 300c ist dadurch noch geringer. Das Fahrzeug 300d befindet sich auf einer stark abfallenden Strecke vor dem Fahrzeug 100. Jetzt befinden sich die Rücklichter 302 oberhalb der Außenspiegel 400. Die Scheinwerferstrahlgrenze der Scheinwerfer des Fahrzeugs 100 wird daher um einen Sicherheitsabstand abgesenkt, sobald erkannt wird, dass das Fremdfahrzeug 300d auf einer abfallenden Strecke fährt. Eine Höhe der Außenspiegel 400 über den Rückleuchten 302 ist abhängig von einer Straßenneigung bzw. Orientierung des anderen Fahrzeugs 300. Fig. 5a zeigt den Unterschied zwischen den Seitenspiegel 400 und den Rücklichtern 302 in Abhängigkeit von der Fahrzeugorientierung.

In der Fig. 5a ist das eigene Fahrzeug 100 zu sehen, das auf der Ebene fährt und ein vorausfahrendes Fahrzeug 300 (Fremd-Fahrzeug), das einen Berg herauffährt. Diese Konstellation ergibt sich nicht nur, wenn das Fremd-Fahrzeug 300 den Berg herauffährt, sondern auch, wenn sich das eigene Fahrzeug 100 den Berg herunterfährt. Es spielt vorwiegend die relative Position der Fahrzeuge zueinander eine Rolle. Zur Verdeutlichung dienen die Figuren 5b und 5c. In der Fig. 5b fährt das eigene Fahrzeug 100 auf einer Ebene, das andere Fahrzeug 300 fährt bergauf. In der Fig. 5c fährt das eigene Fahrzeug 100 bergab, das andere Fahrzeug 300 fährt auf der Ebene. Für die Ansteuerung der Scheinwerfer 104 ist es das gleiche Szenario, da sich alles auf das Kamera oder Fahrzeugkoordinatensystem bezieht. Nur der relative Bezug der Fahrzeuge und deren Ausrichtung zueinander spielt eine Rolle.

In Fig. 5b ist das Fahrzeug 100 auf ebener Strecke und das Fremdfahrzeug 300c auf einer stark ansteigenden Strecke dargestellt. Eine Scheinwerferstrahlgrenze 306 von Scheinwerfern 104 des Fahrzeugs 100 ist direkt auf die Rückleuchten 302 des Fremdfahrzeugs 300c gerichtet. Es ist kein Sicherheitsabstand zu den Außenspiegeln 400 notwendig, da das Fremdfahrzeug 300c vom Fahrzeug 100 aus gesehen schräg angeordnet ist, und die Außenspiegel 400 oberhalb der Scheinwerferstrahlgrenze 306 liegen. Zwischen der Scheinwerferstrahlgrenze 306 und einer Fahrzeuglängsachse 500 ist ein Austrittswinkel α der Scheinwerfer 104 angetragen.

Fig. 5c entspricht Fig. 5b. Hier ist jedoch das Fahrzeug 100 auf einer stark abfallenden Fläche dargestellt, während das Fremdfahrzeug 300e auf ebener Strecke vor dem Fahrzeug 100 fährt. Da die Fahrzeuglängsachse 500 fest an das Fahrzeug 100 gebunden ist, ist der Austrittswinkel α ein relativer Winkel, und damit ist es unabhängig, ob das Fremdfahrzeug 300c oberhalb des Fahrzeugs 100 ist, oder ob das Fahrzeug 100 oberhalb des Fremdfahrzeugs 300e ist.

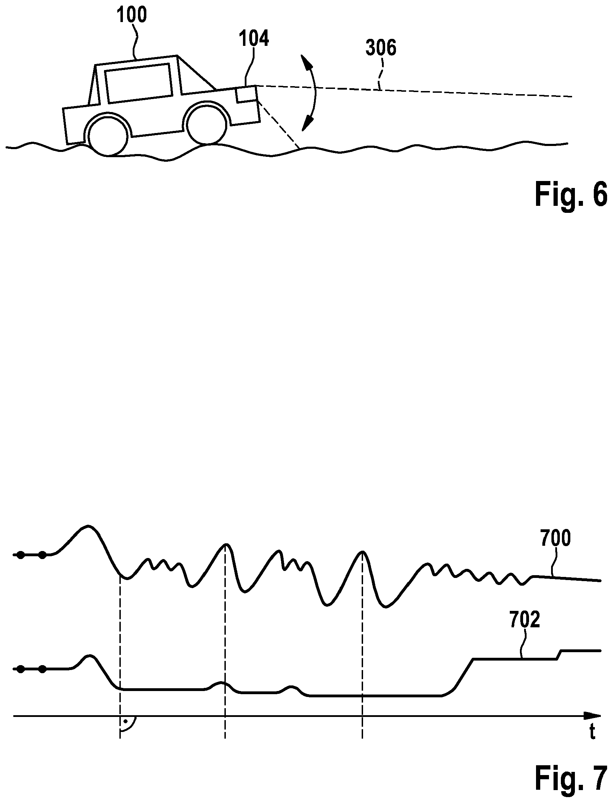

Fig. 6 zeigt ein Fahrzeug 100 mit Scheinwerfern 104 auf einem unebenen Untergrund. Eine Scheinwerferstrahlgrenze 306 ist fahrzeugfest, solange keine Regelung stattfindet. Genau wie die Scheinwerferstrahlgrenze 306 vollzieht eine hier nicht dargestellte fahrzeugfeste Kamera des Fahrzeugs 100 eine Nickbewegung entsprechend der Bodenwellen, über die das Fahrzeug 100 fährt. Eine Regelung kann mittels eines Sicherheitswinkels als Sicherheitswert bei AHC mit Abstand und Straßenqualität erfolgen.

Fig. 7 zeigt einen zeitlichen Verlauf einer Relativposition 700 eines Merkmals eines vorausfahrenden Fremdfahrzeugs zu einem Fahrzeug, wie der in der Erfassungseinrichtung eines Steuergeräts gemäß einem Ausführungsbeispiel der vorliegenden Erfindung erfasst wird. Weiterhin zeigt Fig. 7 einen zeitlichen Verlauf eines Steuersignals 702 am Ausgang des Steuergeräts. Das Steuersignal 702 steuert eine Scheinwerferstrahlgrenze zumindest eines Scheinwerfers des Fahrzeugs. Die Rückleuchten 700 bewegen sich relativ gesehen. Ausgehend von einer Ruhelage steigt die Relativposition 700 mit einer mäßigen Steigung bis zu einem ersten Maximum an. Das Steuersignal 702 folgt der Relativposition 700 zeitverzögert. Nach dem ersten Maximum fällt die Relativposition 700 stark bis zu einem ersten Minimum mit einer großen Amplitude. Das erste Minimum ist durch eine senkrechte gestrichelte Linie dargestellt. Das Steuersignal 702 folgt der Relativposition 700 unverzögert bis zum ersten Minimum. Nach dem ersten Minimum schwingt die Relativposition 700 unterhalb der Ruhelage mit einer mittleren Amplitude. Das Steuersignal 702 schwingt nicht mit. Der unterste Wert wird gehalten. Nach den Schwingungen steigt die Relativposition 700 stark an, bis zu einem zweiten Maximum und fällt danach erneut stark ab und erreicht ein zweites Minimum. Zweites Maximum und zweites Minimum trennt eine große Amplitude. Das zweite Maximum ist erneut mit einer senkrechten gestrichelten Linie gekennzeichnet. Das Steuersignal 702 folgt erneut zeitverzögert mit einem leichten Nachziehen, erreicht jedoch nur einen niedrigen Hochpunkt und fällt direkt nach dem zweiten Maximum wieder auf den tiefen Pegel. Anschließend an das zweite Minimum steigt die Relativposition erneut stark an und schwingt oberhalb der Ruhelage mit einer mittleren Amplitude, fällt danach wieder stark ab und erreicht ein drittes Minimum. Das Steuersignal 702 verbleibt auf dem niedrigen Pegel. Aufgrund der vorhergehenden Schwingungen wird ein erneutes Ansteigen stärker zeitverzögert. Dadurch steigt das Steuersignal 702, erst kurz bevor die Relativposition 700 zum dritten Minimum fällt, auf einen zweiten Hochpunkt, der eine sehr geringe Höhe aufweist. Anschließend an das dritte Minimum schwingt die relative Position mit einer großen Amplitude um die Ruhelage. Ein Maximum der Schwingung ist erneut mit einer senkrechten gestrichelten Linie gekennzeichnet. Da das Steuersignal 702 nun stärker zeitverzögert ist, verbleibt das Steuersignal auf dem niedrigen Pegel. Die Scheinwerfer werden nicht nachgezogen, da insgesamt eine hohe Dynamik festgestellt wurde. Nach dem vierten Minimum schwingt die Relativposition erneut oberhalb der Ruhelage, weist jedoch eine geringe Amplitude auf. Das Steuersignal 702 folgt der Relativposition 700 erneut zeitverzögert bis kurz unter die Ruhelage mit einem späten Nachziehen. Erst nachdem der Relativposition 700 keine weiteren Schwingungen aufweist, erreicht das Steuersignal 702 erneut die Ruhelage.

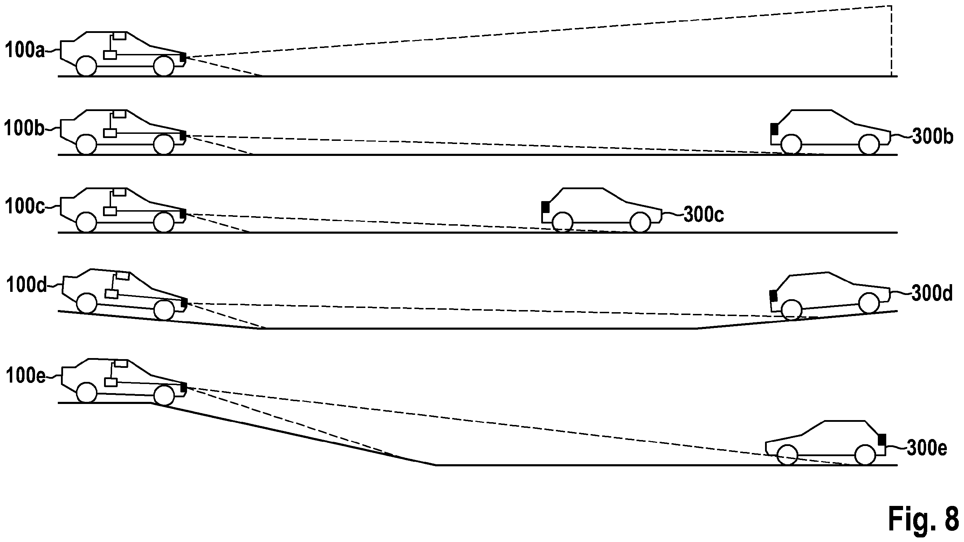

Fig. 8 zeigt ein Fahrzeug 100 in verschiedenen Fahrsituationen. In der ersten Fahrsituation fährt das Fahrzeug 100a auf ebener Fahrbahn mit Fernlicht. Vor dem Fahrzeug 100a befindet sich kein anderes Fahrzeug. In der zweiten Fahrsituation fährt das Fahrzeug 100b auf ebener Fahrbahn mit großer Entfernung hinter einem Fremdfahrzeug 300b. Das Fremdfahrzeug 300b ist von einer Umfelderfassungseinrichtung des Fahrzeugs 100 erfasst und ein Steuergerät gemäß einem Ausführungsbeispiel der vorliegenden Erfindung im Fahrzeug 100 hat eine Scheinwerferstrahlgrenze um einen Sicherheitsabstand tiefer angelegt, als eine Sichtachse zu einem Merkmal des vorausfahrenden Fremdfahrzeugs 300b. In der dritten Fahrsituation fährt das Fremdfahrzeug 300c in einem geringeren Abstand vor dem Fahrzeug 100c. Die obere Scheinwerferstrahlgrenze des Scheinwerferkegels des Fahrzeugs 100c ist weiter zur Fahrbahn abgesenkt, als in der zweiten Fahrsituation. In der vierten Fahrsituation fährt das Fahrzeug 100d auf einem leichter Gefälle und das Fremdfahrzeug 300d fährt auf einer leichten Steigerung. Dadurch befindet sich das Fremdfahrzeug 300d relativ gesehen oberhalb des Fahrzeugs 100d daher wird von Steuergerät die obere Scheinwerferstrahlgrenze angehoben, bis sie Scheinwerferstrahlgrenze erneut nur um den Sicherheitsabstand tiefer angesetzt ist, als die Sichtlinie zu dem Merkmal des Fremdfahrzeugs 300d. In der fünften Fahrsituation befindet sich das Fahrzeug 100e oberhalb des Fremdfahrzeugs 300e. Das Fremdfahrzeug 300e kommt dem Fahrzeug 100e entgegen. Die Scheinwerferstrahlgrenze ist soweit abgesenkt, dass ein Fahrer des Fremdfahrzeugs 300e nicht geblendet wird.

Bei Nacht wird Fernlicht selten eingesetzt. Das liegt u.a. daran, dass andere Verkehrsteilnehmer im Verkehrsraum sind. Abblendlicht hat für Geschwindigkeiten größer 80 km/h eine zu geringe Leuchtweite. Daher wurde AHC (AHC = Adaptive High Beam Control) entwickelt. AHC passt dynamisch die Reichweite des Scheinwerfers an, sodass eine maximale Reichweite des Scheinwerfers ohne Blendung anderer Fahrzeuge eingestellt wird. Die Einstellung der Reichweite kann über die Einstellung unterschiedlicher Abstrahlwinkel erfolgen, wie in Fig. 8 dargestellt ist. Der Abstrahlwinkel kann in mehreren Stufen angehoben oder angepasst werden, wenn sich kein Fahrzeug mehr im Verkehrsraum befindet. Damit kann schneller eine hohe Reichweite erreicht werden und trotzdem die potentielle Blendung neu auftauchender Fahrzeuge gering gehalten werden.

Die Parameter Fahrzeug-Typ, Fahrzeug-Entfernung, Einbauhöhe der Kamera und Position im Bild bzw. Steigung der Straßen oder allgemeiner Orientierung des Fremdfahrzeugs wird genutzt, um auf der (geschätzten) Höhe des Fahrers einen vertikalen Sicherheitsabstand in der Höhe zu haben. Hintergrund ist, dass sich auf Höhe des Fahrers die Seitenspiegel befinden, über die er geblendet werden kann. Weiterhin kann ein Bremsvorgang des anderen Fahrzeugs erkannt werden (z.B. über eine aktivierte dritte Bremsleuchte), durch das ein Nicken des Fremdfahrzeugs verursacht wird. Beim Nicken verändert sich die Höhendifferenz zwischen Rückleuchten und Spiegeln. Rückspiegel sind normal über den Seitenspiegeln und daher weniger kritisch. Sie können abgeblendet werden.

Wenn bestimmte Bereiche des anderen Fahrzeugs beleuchtet werden, führt dies zur Blendung dessen Fahrers. Zu den Bereichen zählen die Seitenspiegel, der Rückspiegel und der Bereich des Fahrerkopfes. Da die Position des Rückspiegels normalerweise über den Seitenspiegeln liegt und weiterhin der Rückspiegel abgeblendet werden kann, können als besonders blendungsgefährdete Bereiche insbesondere die Seitenspiegel und der Fahrerkopf identifiziert werden. Bei einem vorausfahrenden Fahrzeug sind insbesondere die Seitenspiegel relevant, da über die Spiegel eine indirekte Blendung des Fahrers auftreten kann. Bei einem entgegenkommenden Fahrzeug ist insbesondere der Fahrerkopf blendungsrelevant. Neben dem Fahrerkopf (direkt und indirekt über Spiegel) sollte auch die Blendung von Mitfahrern vermieden werden.

Die Kamera erkennt andere Fahrzeuge an Hand deren Beleuchtungseinrichtung wie (Front-) Scheinwerfern, Rücklichtern, Bremslichtern, Rückfahrtlicht und Blinkersignalen. Der besonders blendungsgefährdete Bereich wie der Fahrerkopf des anderen Verkehrsteilnehmers (direkt oder indirekt) fällt normalerweise nicht mit der Beleuchtungseinrichtung zusammen. Es kommt zu Unterschieden zwischen erkanntem Objekt und blendungsgefährdeten Bereich. Mit dem hier vorgestellten Ansatz lässt sich die Ansteuerung der Scheinwerfer dahingehend optimieren, dass durch Abschätzen des Unterschiedes die Sichtweite für den Fahrer erhöht werden kann, ohne den anderen Verkehrsteilnehmer unzulässig zu blenden.

Entgegenkommender und vorausfahrender Verkehr kann von der Kamera beispielsweise über die Lichtfarbe, aber auch die Bewegungsrichtung, unterschieden werden. Der Fahrzeugtyp Lastkraftwagen (LKW) kann über die Positionsleuchten identifiziert werden. Über die Anzahl der Beleuchtungseinrichtungen können beispielsweise Zweiräder identifiziert werden. Eine Klassifikation des Fahrzeug-Typs kann zusätzlich oder alternativ beispielsweise über Mustererkennung des gesamten Fahrzeugs erfolgen. Ebenso ist es möglich, dass über eine Kommunikationseinrichtung zwischen den Fahrzeugen unmittelbar ("car-to-car") oder mittelbar ("car-to-infrastructure") Informationen übertragen werden, aus denen die benötigte Sicherheitshöhe als Sicherheitswert ermittelt werden kann. Neben dem Fahrzeugtyp können so auch Geometriedaten des Fahrzeugs wie beispielsweise die Höhe und/ oder Einbaupositionen von Fahrzeugteilen (z.B. Spiegel, Fahrersitz) übermittelt werden, sowie zusätzlich oder alternativ die Marke und/oder das Fahrzeugmodell, aus denen die benötigte Sicherheitshöhe ermittelt werden kann.

Wenn keine eindeutige Klassifikation des Fahrzeugtyps vorgenommen werden kann, kann der Sicherheitswert abhängig von der Wahrscheinlichkeit für die Zugehörigkeit zu den einzelnen Klassen gewählt werden. Alternativ kann ein Standardwert für die Sicherheitshöhe als Sicherheitswert angenommen werden, um den anderen Verkehrsteilnehmer nicht zu blenden. Dies ist insbesondere der Fall wenn das andere Fahrzeug weit weg ist, was eine Klassifikation erschwert.

Vorausfahrende Zweiräder können in Zweiräder mit Seitenspiegeln oder Rückspiegeln und Zweiräder ohne rückwärts gerichtete Spiegel unterschieden werden. Insbesondere Fahrräder haben normalerweise keine rückwärts gerichteten Spiegel. Durch die niedrige Geschwindigkeit und die meist geringe Sichtbarkeit sind Fahrradfahrer im Straßenverkehr besonders gefährdet. Durch Erhöhen des Abstrahlwinkels bzw. einen negativen Sicherheitsabstand kann ein besonders großer Teil des Radfahrers beleuchtet werden, ohne diesen zu blenden. Dadurch kann der Fahrer den Radfahrer, beispielsweise an Hand der Bewegung der Beine, besonders gut erkennen und richtig reagieren. Der blendungsgefährdete Bereich des Fahrerkopfes sollte auch bei vorausfahrenden Zweirädern wegen der Blendungsgefahr beim Zurückblicken des Fahrers ebenfalls nicht beleuchtet werden. Bei Zweirädern mit rückwärts gerichteten Spiegeln sind diese neben dem Fahrerkopf blendungsgefährdete Bereiche.

Frontscheinwerfer befinden sich immer unterhalb vom Fahrerauge. Daraus ergibt sich ein Unterschied zwischen erkanntem Verkehrsteilnehmer und dem blendungsgefährdetem Bereich des Fahrerkopfes. Prinzipiell kann daher bei den Frontscheinwerfern ein negativer Sicherheitsabstand (Höhe) gewählt werden. Durch die Wahl eines negativen Sicherheitsabstandes (Höhe) kann die Sichtweite für den Fahrer des Fahrzeugs erhöht werden, ohne Blendung beim anderen Fahrer hervorzurufen.

Wenn der Fahrzeugtyp geschätzt wird (z.B. Positionsleuchten von LKWs), kann die Sicherheits-Höhe noch genauer berechnet werden (LKW-Fahrer sitzen im Normalfall deutlich über den Rücklichtern und Frontscheinwerfern).

Lastkraftwagen (LKW) besitzen häufig Positionsleuchten, um auch bei Kuppen frühzeitig erkannt zu werden. An Hand der leuchtenden Positionsleuchten, die von der Kamera erkannt werden können, kann ein Fahrzeug als LKW klassifiziert werden. Die Sicherheits-Höhe wird entsprechend verkleinert bzw. die Hell-Dunkel-Grenze angehoben, wodurch die Sichtweite für den Fahrer noch weiter erhöht wird und dennoch der Fahrer des klassifizierten Fahrzeugtyps nicht geblendet wird.

Bei einem querenden Fahrzeug, welches von der Seite beleuchtet wird, sollte die Hell-Dunkel-Grenze nur so weit angehoben werden, dass weder eine indirekte Blendung durch die Spiegel, noch eine direkte Blendung des Fahrers und der Mitfahrer erfolgt.

Unter einem Fahrzeugtyp kann in der vorliegenden Erfindung die Fahrtrichtung (z.B. vorausfahrend, entgegenkommend, querend) verstanden werden, ebenso wie die Fahrzeugklasse (z.B. Personenkraftwagen PKW, Lastkraftwagen LKW, Zweirad), der Modelltyp (z.B. Kleinwagen, Geländewagen) oder Modellreihe (beispielsweise Fahrzeuge eines Modelltyps eines Herstellers mit häufig ähnlichen geometrischen Eigenschaften) und/oder konkrete Fahrzeugmodelle verstanden werden.

Neben der Sicherheitshöhe als Sicherheitswert, die aus den Objektparametern ermittelt werden kann, kann zusätzlich oder alternativ eine Sicherheitshöhe abhängig von der Einbauposition von Kamera, Scheinwerfer und der Objektposition ermittelt werden. Durch den meist versetzten Einbau von Kamera und Scheinwerfer kann es abhängig von der Objektposition zu Sichtweitenverlust für den Fahrer oder zu Blendung des anderen Verkehrsteilnehmers kommen. Wenn das Objekt unterhalb der Kamera ist, beispielsweise unterhalb der Linie Kamera-Scheinwerfer, kann es durch die unterschiedliche Einbauposition zu Blendung kommen. Befindet sich das Objekt dagegen oberhalb, kann es zu Sichtweitenverlust für den Fahrer kommen. Die Einbaupositionen von Kamera und Scheinwerfer sind während der Produktion bekannt. Es gibt auch Ansätze, bei denen sich die Kamera selbst nach einer gewissen Strecke kalibriert und die Einbauposition schätzen kann. Die Scheinwerfer-Ansteuerung kann demnach vorteilhaft an die geometrischen Verhältnisse angepasst werden.

Die Sicherheitshöhe als Sicherheitswert zur Vermeidung der Blendung des anderen Verkehrsteilnehmers wird relativ zur Position des erkannten Objekts ermittelt. Aus der Sicherheitshöhe wird abhängig von der Objekt-Entfernung ein Sicherheitswert beispielsweise ein Sicherheitswinkel ermittelt. Mit Hilfe des Sicherheitswinkels und der Richtung des erkannten Objekts und/oder der Position im Bild kann der Abstrahlwinkel des zumindest einen Scheinwerfers ermittelt werden.

Neben der Höhendifferenz hat ebenfalls die laterale Differenz zwischen Leuchte (Rücklicht, Frontscheinwerfer) und blendungsgefährdetem Bereich (Fahrerauge direkt oder indirekt über reflektierende Flächen) einen Einfluss. Hier bestimmt durch die geometrischen Verhältnisse insbesondere die relative Position des Fremdfahrzeugs zu den anzusteuernden Scheinwerfern eine Rolle.

Je nach relativer Position des anderen Fahrzeugs verändern sich dessen geometrischen Eigenschaften. Beispielsweise liegen die Rückleuchten eines vorausfahrenden Fahrzeugs beim Hinauffahren auf eine Steigung im Vergleich zu den blendungsgefährdeten Seitenspiegeln niedriger als bei der Fahrt auf der Ebene oder beim Herunterfahren einer Steigung. Der Sicherheitswert, insbesondere die Sicherheitshöhe oder der Sicherheitswinkel, kann demnach vorteilhaft an die Topographie und die relative Position des anderen Fahrzeugs angepasst werden, wodurch eine erhöhte Sichtweite ohne Blendung des anderen Fahrers möglich wird.

Alternativ zur "Sicherheits-Höhe" (Sicherheits-Abstand in der Höhe) kann ein Abstand der Hell-Dunkel-Grenze vom anderen Fahrzeug berechnet werden. Je nach Leuchten-Typ (Frontscheinwerfer/Rücklichter) kann der Sicherheits-Abstand anders gewählt werden. Je weiter ein Fahrzeug entfernt ist, desto weniger Licht kommt bei diesem an. Eine "Blendung" eines weit entfernten Fahrzeugs wirkt sich ggf. kaum aus (z.B. Fahrzeug viele hundert Meter entfernt fährt mit Fernlicht entgegen daher ist eine Blendung kaum wahrnehmbar). Je weiter ein Fahrzeug entfernt ist, desto risikobereiter kann die Ansteuerung ausfallen (d.h. höherer Abstrahlwinkel des Scheinwerfers, kleinerer Sicherheitswert für die Ansteuerung).

Der Ansatz des Sicherheits-Winkels wurde unter Anderem durch den Ausgleich von Fahrbahn-Unebenheiten getrieben. Ursprünglich wurde ein fester Sicherheitswinkel als Kompromiss zwischen Sichtweite für den Fahrer und Vermeidung von Blendung anderer Verkehrsteilnehmer als Sicherheitswert genutzt. Wenn nun die Straßenqualität gemessen werden kann, kann der Sicherheits-Winkel daran optimiert werden. Die Straßenqualität kann selbstständig vom Fahrzeug gemessen werden. Beispielsweise kann der Nickwinkel des Fahrzeugs ausgewertet werden. Wenn zusätzlich die Pedalstellungen und/oder Beschleunigung/ Bremsvorgang des Fahrzeugs mit berücksichtigt werden, kann die durch die Straßenunebenheit hervorgerufene Nickbewegung des Fahrzeugs geschätzt werden. Weiterhin können Muster und ungleichmäßige Asphaltfarbe auf der Straße genutzt werden, um Teile zu sehen, die geflickt wurden, welche meist keinen glatten Übergang haben, was Nicken zur Folge haben kann.

Wenn Bodenwellen direkt erkannt werden können diese ebenfalls mit in den Sicherheitswert, z.B. Sicherheitswinkel, mit einbezogen werden. Auch wenn die Bodenwellen bewusst installiert wurden (zum Ausbremsen des Verkehrs in Bereichen niedriger Geschwindigkeit), sinkt die Straßenqualität für den Fahrer und das Gesamtsystem (da nicht gleichmäßig gefahren werden kann).

Durch Detektion von "Aufblitzen" von Scheinwerfern anderer Fahrzeuge kann ebenfalls auf die Straßenqualität geschlossen werden. Durch den Abstand zwischen Kamera und Scheinwerfer ist implizit schon ein Sicherheitsabstand in der Höhe eingebaut. Dieser Abstand kann bei der Berechnung des dynamischen Sicherheitswertes, beispielsweise Sicherheitswinkels, mit einbezogen werden. Der Abstand kann sich je nach Fahrzeug und Einbauposition ändern: Wenn die Kamera im Führerhaus angebracht ist und der LKW bremst, nickt das Führerhaus stärker als der Scheinwerfer. Durch das Nicken ändert sich der Abstand zwischen Kamera und Scheinwerfer, wodurch der implizit gegebene Sicherheitsabstand in der Höhe oder der Sicherheitswinkel, d.h. der Sicherheitswert, verändert wird.

Der Rollwinkel bzw. Wankwinkel ist für CHC (blendfreies Fernlicht) wichtig: wenn die seitlichen Schattengrenzen knapp an das "entleuchtete" Fahrzeug gelegt werden, und das Eigenfahrzeug rollt, kann es zu Blendung kommen. In der Erfassungseinrichtung kann der Wankwinkel erfasst werden. Auch bei AHC (gleitende Leuchtweite) kann der Wankwinkel für die Sicherheitsabstands-Berechnung verwendet werden, da dadurch die normalerweise waagerecht verlaufende Hell-Dunkel-Grenze schräg verläuft. Weiterhin kann die Scheinwerfer-Lichtverteilung bei nicht exakt gerade verlaufenden Lichtverteilungen genutzt werden, um den Sicherheitsabstand im jeweiligen Punkt genauer zu berechnen.

Die Bewegung/ Dynamik des Fremdfahrzeugs hat ebenfalls einen Einfluss auf den Sicherheits-Winkel. Wenn das Fahrzeug entgegenkommt, kann je nach Geschwindigkeit ein größerer Sicherheits-Abstand gewählt werden: Je nach Fahrtrichtung (z.B. über Leuchtenfarbe), Bildposition und -bewegung wird ein anderer Abstand/ -Winkel gewählt.

Bei großen Entfernungen kann die Geschwindigkeit schwer geschätzt werden, wodurch als Näherung die Eigen-Geschwindigkeit verwendet werden kann. Die Dynamik des Fremdfahrzeugs kann auch über die Bewegung im Bild erfasst werden. Wenn sich das Fahrzeug nicht in eine einzige (vertikale) Richtung bewegt, kann der Sicherheitswert, z.B. der Sicherheitswinkel, an die ÄnderungsRate angepasst werden. Wenn es abschätzbar ist, wie groß die Schwankungen sind, kann der Sicherheitsabstand daran angepasst werden.

Statt einer Kamera kann generell ein vorausschauender Sensor genutzt werden. Es ist auch eine Kombination von Sensoren denkbar. Beispielsweise könnte der Abstand zwischen den Fahrzeugen durch ein Radar-System gemessen werden. Die Straßenqualität und zusätzlich oder alternativ der tatsächlich benötigte Sicherheitswert könnte aus einer Navigationskarte entnommen werden, in der diese zuvor abgespeichert wurde (entweder vom Hersteller oder als "lernende Karte" durch das Fahrzeugsystem selbst). Ebenso kann ein räumlich auflösender Sensor, wie beispielsweise ein Stereokamerasystem verwendet werden.

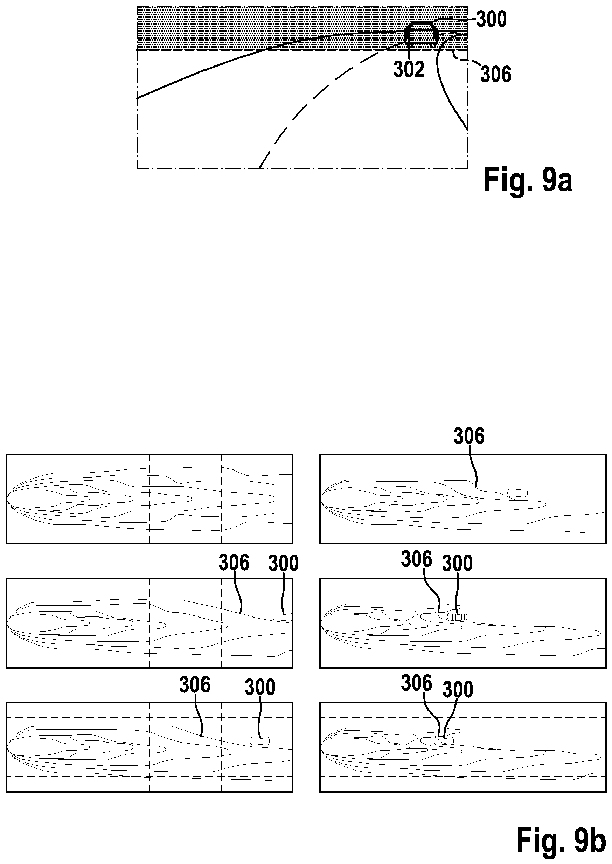

Fig. 9a zeigt ein Kamerabild einer Umfelderfassungseinrichtung eines Fahrzeugs. Das Kamerabild zeigt ein Fremdfahrzeug 300 mit Rückleuchten 302 auf einer Straße mit einer leichten Rechtskurve. Durch ein Verfahren zum Anpassen einer oberen Scheinwerferstrahlgrenze 306 eines Scheinwerferkegels zumindest eines Scheinwerfers des Fahrzeugs gemäß einem Ausführungsbeispiel der vorliegenden Erfindung wird eine Relativposition der Rückleuchten 302 aufgezeichnet und die Scheinwerferstrahlgrenze 306 so weit abgesenkt, das ein Fahrer des Fremdfahrzeugs 300 nicht geblendet wird.

Fig. 9b zeigt mehrere Draufsichten auf mehrere Abbilder von Lichtkegeln auf einer Fahrbahn bei unterschiedlichen Abständen eines Fremdfahrzeugs 300 von dem Fahrzeug. In der ersten Draufsicht ist kein Fremdfahrzeug 300 abgebildet. Der Lichtkegel ist symmetrisch. In der zweiten Draufsicht ist das Fremdfahrzeug 300 weit entfernt vom Fahrzeug abgebildet. Der Lichtkegel wird vor dem Fremdfahrzeug 300 leicht verformt, und eine Scheinwerferstrahlgrenze 306 befindet sich vor dem Fremdfahrzeug 300. In der dritten Draufsicht ist das Fremdfahrzeug 300 näher als in der zweiten Draufsicht dargestellt, die Scheinwerferstrahlgrenze 306 ist weiter abgesenkt. In der vierten und fünften Draufsicht nähert sich das Fremdfahrzeug 300 weiter an und die Scheinwerferstrahlgrenze 306 wird weiter abgesenkt, bis in der fünften Darstellung eine Minimalentfernung für die Scheinwerferstrahlgrenze 306 erreicht ist. In der sechsten Darstellung ist das Fremdfahrzeug 300 noch näher am Fahrzeug dargestellt, der Lichtkegel ist jedoch nicht noch weiter verformt. Jetzt wird eine Möglichkeit der Blendung eines Fahrers des Fremdfahrzeugs 300 in Kauf genommen, um eine Sichtweite eines Fahrers des Fahrzeugs auf einem Mindestmaß, wie es beispielsweise bei Abblendlicht der Fall ist, zu halten.

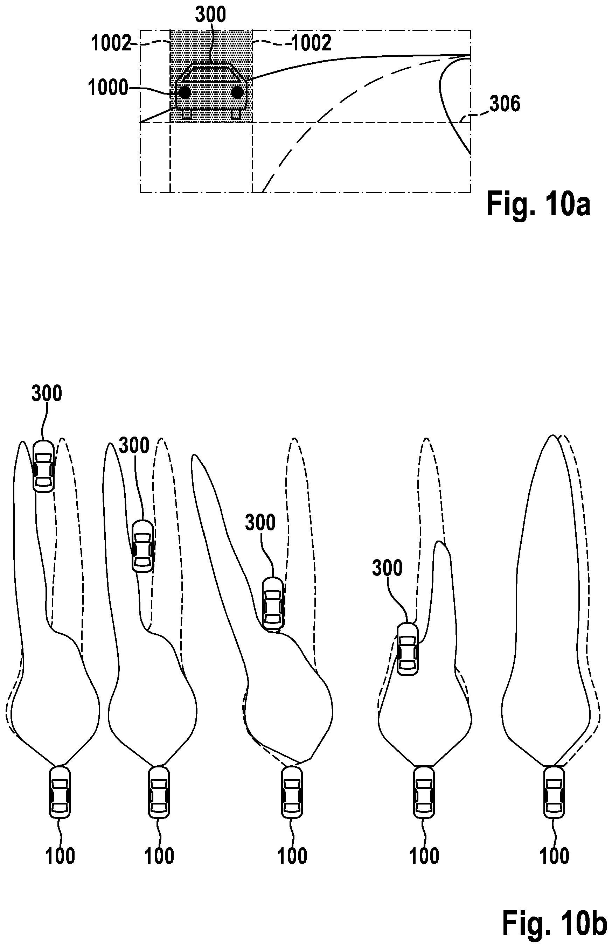

Anstatt den Scheinwerfer nur in der Leuchtweite zu regulieren (z.B. AHC und ALC = Adaptive Low Beam Control = dynamische Leuchtweitenregulierung), kann über ein blendfreies Fernlicht noch mehr Licht ohne zusätzliche Blendung in den Verkehrsraum gebracht werden. Damit soll immer mit Fernlicht gefahren werden und Bereiche, in denen sich andere Verkehrsteilnehmer befinden "entleuchtet" werden. Eine Realisierungsmöglichkeit des blendfreien Fernlichts als CHC (Continuous High Beam Control) ist in Fig. 10 dargestellt. CHC wird teilweise auch als "vertikale Hell-Dunkel-Grenze" vHDG bzw. "vertical cut-off-line" vCOL bezeichnet.

Fig. 10a zeigt wie Fig. 9a ein Kamerabild einer Umfelderfassungseinrichtung eines Fahrzeugs. Im Gegensatz zu Fig. 9a kommt das Fremdfahrzeug 300 dem Fahrzeug entgegen. Frontscheinwerfer 1000 sind als im Dunklen erkennbare Merkmale abgebildet. Weiterhin sind Vertikale Scheinwerferstrahlgrenzen 1002 rechts und links des Fremdfahrzeugs 300 dargestellt. Dadurch kann die Straße rechts und links des Fremdfahrzeugs 300 besser ausgeleuchtet werden.

Fig. 10b zeigt eine Draufsicht auf mehrere Fahrsituationen eines Fahrzeugs 100 in denen die horizontale und die vertikalen Scheinwerferstrahlgrenzen an ein Fremdfahrzeug 300 angepasst werden. Dazu können die Frontscheinwerfer unabhängig voneinander horizontal und vertikal verschwenkt werden. Jeder der Scheinwerfer strahlt eine Lichtkeule ab, die solange rechts bzw. links am Fremdfahrzeug 300 vorbei gelenkt wird, bis eine minimale Entfernung der horizontalen Scheinwerferstrahlgrenze erreicht ist. Dann verbleibt die horizontale Scheinwerferstrahlgrenze um eine Mindestausleuchtung der Straße zu gewährleisten und das Fremdfahrzeug 300 dringt in den Lichtkegel der Scheinwerfer ein, dann entspricht der Lichtkegel dem eines normalen Abblendlichts.

Wird vergleichend AHC und CHC aus Fahrer-/ Kameraperspektive dargestellt, ergibt sich für die Grenze, die den Blendungsbereich nach unten hin begrenzt, die gleiche oder zumindest eine sehr ähnliche Lösung für eine optimierte Einstellung der vertikalen Abstrahlcharakteristik von Scheinwerfern. Die Grenze, die den Blendungsbereich nach unten hin begrenzt kann demnach ebenso als obere Scheinwerferstrahlgrenze verstanden werden.

Der hier vorgestellte Detektionsalgorithmus VDD (VDD = Vehicle Detection in Darkness) erkennt andere Fahrzeuge bei Nacht an Hand der Beleuchtung (Scheinwerfer/ Rücklichter). Über den Abstand von linkem und rechtem Scheinwerfer im Bild wird die Entfernung geschätzt, da der Abstand bei allen Fahrzeugen ähnlich groß ist.

Technisch ist es möglich die Scheinwerfer quasi stufenlos anzusteuern. Durch die stufenlose Ansteuerung der Scheinwerfer kann die Beleuchtung näher an das andere Fahrzeug herangebracht werden. Ebenso kann mit einem festen Winkel-Offset gearbeitet werden. Der Offset ist kann so gewählt werden, dass bei Nickbewegungen die Blendung anderer Verkehrsteilnehmer möglichst vermieden wird. Der Offset soll weiterhin unterschiedliche Einbauhöhen der Rück-/SeitenSpiegel von verschiedenen Fahrzeugen berücksichtigen. Teilweise liegen die Spiegel unterhalb der Rückleuchten. Je nach Entfernung der anderen Verkehrsteilnehmer wird damit eine gute Ausleuchtung erreicht, aber ein Sichtweiteverlust ist noch verkleinerbar.

Bei der Einbeziehung mehrerer Verkehrsteilnehmer können verschiedene Berechnungen mit entsprechenden Vor- und Nachteilen in Bezug auf Rechengenauigkeit und Rechengeschwindigkeit durchgeführt werden.

Das am weitesten unten liegende Objekt ist durch Nickbewegungen am stärksten gefährdet. Geometriebedingt ist das auch meist das zum eigenen Fahrzeug am nächsten liegende Objekt (abhängig von Einbauhöhe Scheinwerfer). Vorteilhaft ist die schnelle Berechnung des genauen Sicherheitswertes (z.B. Sicherheitswinkels) durch eine schnelle Vorselektion eines Fahrzeugs.

Für jedes Fahrzeug im Bild kann ein Kritikalitätsmaß berechnet werden, wie wahrscheinlich und welche Auswirkungen die Blendung des anderen Fahrzeugs hat. Dazu kann neben dem Abstand und der Objektposition im Bild auch die Fahrtrichtung (Bewegung im Bild, Lichterfarbe) und der Fahrzeugtyp mit ausschlaggebend sein. Entgegenkommende Fahrzeuge sind stärker gefährdet als vorausfahrende, da entgegenkommende Fahrzeuge durch die größere Differenzgeschwindigkeit sich schneller vor dem Fahrzeug bewegen. Eine (Sicht-) Winkel-Änderung findet daher schneller statt. Zweiräder besitzen eine höhere Dynamik und gleichzeitig eine geringere Stabilität als andere Fahrzeuge. Diese können durch die Dynamik schneller in den Blendungsbereich geraten, wobei sich Blendung durch die geringere Stabilität ungünstiger auswirken kann als bei anderen Fahrzeugen. Vorteilhaft ist die Auswahl eines einzelnen Fahrzeugs, da dadurch eine für das Fahrzeug optimierte Ansteuerung auch hinsichtlich des Fahrer-Komforts erfolgen kann. Die Auswahl des einzelnen Fahrzeugs erfordert jedoch einen größeren Rechenaufwand als die Wahl des untersten Objekts.

Wenn der Sicherheitswert (z.B. Sicherheitswinkel) für jedes einzelne Objekt berechnet wird, ist eine "globale" Optimierung des Sicherheitswinkels möglich. Mit dieser Berechnungsart kann der Lichtkegel am engsten an die anderen Fahrzeuge gebracht werden, da der optimale Sicherheitswinkel für alle Fahrzeuge bekannt ist. Durch die Berechnung des Sicherheitswinkels für jedes einzelne Fahrzeug ist der Berechnungsaufwand entsprechend hoch.

Es ist auch möglich die Berechnungsmethoden zu vermischen. So können z.B. die am stärksten blendungs-gefährdeten Fahrzeuge ermittelt werden und innerhalb dieser Gruppe eine andere Berechnungsmethode (jedes Fahrzeug einzeln betrachten) zur Berechnung des Sicherheitsabstands gewählt werden. Beispielsweise kann damit die Gruppe der Fahrzeuge halbiert werden, wenn nur die Hälfte der Fahrzeuge am weitesten unten im Bild sind, mit betrachtet werden, da für diese die Blendungsgefährdung durch Nickbewegungen am größten ist. Für diese Gruppe kann eine genauere Betrachtung durchgeführt werden (z.B. Sicherheitswinkel für alle Fahrzeuge berechnen).

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (200) zum Anpassen einer oberen Scheinwerferstrahlgrenze (306) eines Scheinwerferkegels zumindest eines Scheinwerfers (104) eines Fahrzeugs (100), wobei das Verfahren die folgenden Schritte umfasst:
Einlesen (202) zumindest einer Anordnungsposition einer Beleuchtungseinheit (302) an einem Fremdfahrzeug (300) und Auswertung einer Anzahl von Beleuchtungseinheiten (302) des Fremdfahrzeugs (300) und/oder Einlesen einer Fahrzeugkontur des Fremdfahrzeugs (300), um ein Fremdfahrzeug-Identifikationssignal bereitzustellen;
Ermitteln (204) eines Fahrzeugtyps des Fremdfahrzeugs (300) unter Verwendung des Fremdfahrzeug-Identifikationssignals, wobei unter einem Fahrzeugtyp eine Klasse von Fahrzeugen wie Pkws, Lkws, Motorräder, Radfahrer und/oder ein spezieller Fahrzeugtyp eines Fahrzeugherstellers verstanden werden; und
Ausgeben (206) eines Steuersignals (702) zum Anpassen der oberen Scheinwerferstrahlgrenze (306), wobei das Steuersignal (702) unter Berücksichtigung des ermittelten Fahrzeugtyps ausgegeben wird.

2. Verfahren (200) gemäß Anspruch 1, **dadurch gekennzeichnet, dass** im Schritt des Ausgebens (206) das Steuersignal (702) zum Anpassen der oberen Scheinwerferstrahlgrenze (306) derart bereitgestellt wird, dass der Scheinwerfer (104) des Fahrzeugs (100) den Spiegel (400) nicht beleuchtet.

3. Verfahren (200) gemäß Anspruch 1 oder 2, **dadurch gekennzeichnet, dass** im Schritt des Einlesens (202) eine Farbe des von der Beleuchtungseinheit (302) ausgesandten Lichts eingelesen wird und im Schritt des Ermittelns (204) unter Verwendung der Farbe des eingelesenen Lichts ein Rückschluss auf eine Fahrtrichtung des Fremdfahrzeugs (300) bestimmt wird.

4. Verfahren (200) gemäß einem der vorangegangenen Ansprüche, **dadurch gekennzeichnet, dass** wenn im Schritt des Einlesens (202) ein Fremdfahrzeug-Identifikationssignal bereitgestellt wird, das eine Information enthält, dass eine exakte Klassifikation des Fahrzeugtyps des Fremdfahrzeugs (300) nicht möglich ist, im Schritt des Ausgebens (206) das Steuersignal (702) derart bereitgestellt wird, dass die obere Scheinwerferstrahlgrenze (306) auf eine vorbestimmte Sicherheitsobergrenze angepasst wird.

5. Steuergerät (102), das Einheiten aufweist, die ausgebildet sind, um die Schritte eines Verfahrens (200) gemäß einem der Ansprüche 1 bis 4 auszuführen oder anzusteuern.

6. Computer-Programmprodukt mit Programmcode zur Durchführung des Verfahrens (200) zum Anpassen einer oberen Scheinwerferstrahlgrenze (306) eines Scheinwerferkegels zumindest eines Scheinwerfers (104) eines Fahrzeugs (100) nach einem der Ansprüche 1 bis 4, wenn das Programm auf einem Steuergerät (102) gemäß Anspruch 5 ausgeführt wird.

## Claims

1. Method (200) for adapting an upper headlight beam boundary (306) of a headlight cone of at least one headlight (104) of a vehicle (100), wherein the method comprises the following steps:
reading (202) at least one arrangement position of an illumination unit (302) of an other vehicle (300) and evaluation of a number of illumination units (302) of the other vehicle (300) and/or reading a vehicle contour of the other vehicle (300) to provide an other-vehicle identification signal;
ascertaining (204) one vehicle type of the other vehicle (300) using the other-vehicle identification signal, wherein a vehicle type is understood to be a class of vehicles such as passenger cars, lorries, motorcycles, cyclists and/or a specific vehicle type of a vehicle manufacturer; and
outputting (206) a control signal (702) for adapting the upper headlight beam boundary (306), wherein the control signal (702) is output taking into account the ascertained vehicle type.

2. Method (200) according to Claim 1, characterized that, during the outputting step (206), the control signal (702) is provided for adapting the upper headlight beam boundary (306) such that the headlight (104) of the vehicle (100) does not illuminate the mirror (400) of the vehicle (100).

3. Method (200) according to Claim 1 or 2, **characterized in that**, during the reading step (202), a colour of the light emitted by the illumination unit (302) is read and, during the ascertaining step (204), a conclusion relating to a driving direction of the other vehicle (300) is determined using the colour of the light that has been read.

4. Method (200) according to one of the preceding claims, **characterized in that**, when an other-vehicle identification signal containing information that exact classification of the vehicle type of the other vehicle (300) is not possible is provided during the reading step (202), the control signal (702) is provided during the outputting step (206) such that the upper headlight beam boundary (306) is adapted to a predetermined upper safety boundary.

5. Control device (102) having units that are embodied to perform or control the steps of a method (200) according to one of Claims 1 to 4.

6. Computer program product with program code for performing the method (200) for adapting an upper headlight beam boundary (306) of a headlight cone of at least one headlight (104) of a vehicle (100) according to one of Claims 1 to 4, when the program is executed on a control device (102) according to Claim 5.

## Revendications

1. Procédé (200) permettant d'ajuster une limite supérieure de rayonnement de phare (306) d'un cône de phare d'au moins un phare (104) d'un véhicule (100), dans lequel le procédé comprend les étapes suivantes :
lire en entrée (202) au moins une position d'agencement d'une unité d'éclairage (302) située sur un autre véhicule (300) et évaluer un certain nombre d'unités d'éclairage (302) de l'autre véhicule (300) et/ou lire en entrée un contour du véhicule de l'autre véhicule (300) afin de produire un signal d'identification d'autre véhicule ;
déterminer (204) un type de véhicule de l'autre véhicule (300) à l'aide du signal d'identification d'autre véhicule, dans lequel un type de véhicule est compris comme étant une classe de véhicules tels que des voitures particulières, des camions, des motocyclettes, des cyclistes et/ou un type de véhicule spécifique d'un constructeur de véhicules ; et
fournir en sortie (206) un signal de commande (702) permettant d'ajuster la limite supérieure de rayonnement de phare (306), dans lequel le signal de commande (702) est fourni en sortie en tenant compte du type de véhicule déterminé.

2. Procédé (200) selon la revendication 1, **caractérisé en ce que**, lors de l'étape de fourniture en sortie (206), le signal de commande (702) permettant d'ajuster la limite supérieure de rayonnement de phare (306) est produit de telle manière que le phare (104) du véhicule (100) n'éclaire pas le rétroviseur (400).

3. Procédé (200) selon la revendication 1 ou 2, **caractérisé en ce que**, lors de l'étape de lecture en entrée (202), une couleur de la lumière émise par l'unité d'éclairage (302) est lue en entrée et, lors de l'étape de détermination (204), une conclusion quant à une direction de déplacement de l'autre véhicule (300) est déterminée à l'aide de la couleur de la lumière lue en entrée.

4. Procédé (200) selon l'une des revendications précédentes, **caractérisé en ce que**, lors de l'étape de lecture en entrée (202), lorsqu'un signal d'identification d'autre véhicule produit contient une information selon laquelle une classification exacte du type de véhicule de l'autre véhicule (300) n'est pas possible, lors de l'étape de fourniture en sortie (206), le signal de commande (702) est produit de telle manière que la limite supérieure de rayonnement de phare (306) soit ajustée à une limite de sécurité supérieure prédéterminée.

5. Appareil de commande (102) comportant des unités qui sont conçues pour exécuter ou commander les étapes d'un procédé (200) selon l'une des revendications 1 à 4.

6. Produit de programme informatique comportant un code de programme destiné à mettre en œuvre le procédé (200) permettant d'ajuster une limite supérieure de rayonnement de phare (306) d'un cône de phare d'au moins un phare (104) d'un véhicule (100) selon l'une des revendications 1 à 4 lorsque le programme est exécuté sur un appareil de commande (102) selon la revendication 5.
